# EUROPEAN PATENT APPLICATION

(11) **EP 4 753 169 A1**
(43) Date of publication of application: **03.06.2026**
(21) Application number: 24870853.9
(22) Date of filing: 26.09.2024
(51) Int. Cl.: H04B 7/185

(54) **COMMUNICATION METHOD AND COMMUNICATION APPARATUS**

(30) Priority: 26.09.2023 CN 202311255905
(71) Applicant: HUAWEI TECHNOLOGIES CO., LTD., Shenzhen, Guangdong 518129 (CN)
(72) Inventor: CHEN, Ying, Shenzhen, Guangdong 518129 (CN); TIE, Xiaolei, Shenzhen, Guangdong 518129 (CN); ZHANG, Jiayin, Shenzhen, Guangdong 518129 (CN)
(74) Representative: MERH-IP Matias Erny Reichl Hoffmann Patentanwälte PartG mbB
(86) International application number: PCT/CN2024/121348
(87) International publication number: WO 2025/067310

(57) **Abstract**

This application provides a communication method and a communication apparatus. The communication method includes: A first network device determines first indication information, where the first indication information indicates that access of a terminal device in at least one first area is allowed or prohibited, each first area in the at least one first area does not overlap another first area, and the first area is a part of a service area of the first network device; and sends the first indication information. According to this solution, the first network device may perform access control on terminal devices in some areas in the service area, to prevent all terminal devices or a plurality of terminal devices in the service area from accessing the first network device, which causes storage pressure of the first network device and affects system communication quality.

## Description

This application claims priority to Chinese Patent Application No. 202311255905.9, filed with the China National Intellectual Property Administration on September 26, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A satellite network is a hot topic in research in the world today. A satellite communication technology has been increasingly mature. For example, a non-terrestrial network (non-terrestrial network, NTN) implements communication by using a network or a network segment of an onboard radio frequency on a satellite, and can provide wider coverage. In addition, a satellite base station is not vulnerable to a natural disaster or external force.

In the NTN, communication between satellites may fail due to an excessively long distance between the satellites. When the satellite communicates with a terminal, data of the terminal needs to be first stored on the satellite, and when the satellite moves into a position at which a core network is present, the data of the terminal that is stored on the satellite is sent to the core network. When storage pressure of the satellite reaches saturation, an access storm of the terminal device may occur.

In an NTN scenario, there is an urgent need for a communication method to implement access control on the terminal device while taking a storage capability of the satellite into account.

### SUMMARY

This application provides a communication method and a communication apparatus, to implement access control on a terminal device while taking a storage capability of a satellite into account.

According to a first aspect, a communication method is provided. The method may be performed by a first network device, or may be performed by a chip or a circuit configured in the first network device. This is not limited in this application.

The method includes: determining first indication information, where the first indication information indicates that access of a terminal device in at least one first area is allowed or prohibited, any two first areas in the at least one first area do not overlap, and the first area is a part of a service area of the first network device; and sending the first indication information.

In this application, the first network device sends broadcast signals to the service area. The service area includes different areas (referred to as sub-areas below for ease of description). The different sub-areas may be understood as follows: The service area of the first network device is divided into a plurality of non-overlapping areas, for example, an area #a and an area #b. Broadcast signals in different sub-areas have different directions, and broadcast signals in different directions correspond to different indexes. In other words, the first network device sends, to different sub-areas, broadcast signals indicated by different indexes.

The first area may be understood as a part of the service area of the first network device. In other words, the first area is a sub-area included in the service area, or may be understood as a part of a cell area. This is not limited in this application.

Based on the foregoing technical solution, the first network device may indicate, to a terminal device in one or more first areas in the service area, whether access is allowed. It may be understood that the terminal device in the service area of the first network device may initiate random access to the first network device. However, storage space of the first network device is limited. Once a plurality of terminal devices simultaneously initiate random access to the first network device, storage pressure of the first network device reaches a saturated state, and data of the terminal devices cannot be stored, causing a communication fault. In this application, before the terminal devices initiate random access, the first network device performs access control on terminal devices in some areas in the service area, to prevent all terminal devices or a plurality of terminal devices in the service area from accessing the first network device, which causes storage pressure of the first network device and affects system communication quality.

With reference to the first aspect, in some implementations of the first aspect, each first area in the at least one first area is a coverage area of a first broadcast signal indicated by a first index, and the first indication information indicates that access of a terminal device that receives the first broadcast signal indicated by the first index is allowed or prohibited.

In this solution, the terminal device in the first area receives the first broadcast signal indicated by the first index, in other words, a broadcast signal received by the terminal device in the first area is the first broadcast signal indicated by the first index. The first indication information indicates that access of the terminal device that receives the first broadcast signal indicated by the first index is allowed or prohibited.

With reference to the first aspect, in some implementations of the first aspect, the first network device indicates, by using the first indication information, that access to some sub-areas in the service area (including different sub-areas) is allowed or prohibited.

In a possible implementation, the first network device indicates, by using the first indication information, that access to some sub-areas in the service area (including different sub-areas) is allowed, and access to some sub-areas in the service area is prohibited.

With reference to the first aspect, in some implementations of the first aspect, the first indication information has an association relationship with the first index.

In this technical solution, the first indication information corresponds to the first index, and it may be determined based on a correspondence between the first indication information and the first index, that access of the terminal device that receives the broadcast signal indicated by the first index is allowed or prohibited.

With reference to the first aspect, in some implementations of the first aspect, the first area is a coverage area of a first broadcast signal corresponding to a first direction.

In this technical solution, the first network device sends broadcast signals in different directions to different sub-areas included in the service area, and the first network device indicates, by using indication information, that access of a terminal device that receives the first broadcast signal corresponding to the first direction is allowed or prohibited.

With reference to the first aspect, in some implementations of the first aspect, the first indication information indicates that access of the terminal device that receives the first broadcast signal corresponding to the first direction is allowed or prohibited.

With reference to the first aspect, in some implementations of the first aspect, the first indication information is determined based on a storage status of the first network device.

In this technical solution, the first network device dynamically performs access control based on a storage capability of the first network device, thereby improving flexibility of access control.

With reference to the first aspect, in some implementations of the first aspect, the first network device determines, based on the storage status of the first network device, that some or all terminal devices in a service range may be allowed to initiate random access.

With reference to the first aspect, in some implementations of the first aspect, when the storage space of the first network device is sufficient, the first network device may allow all the terminal devices in the service area to initiate random access.

With reference to the first aspect, in some implementations of the first aspect, when the storage space of the first network device is severely insufficient, the first network device may prohibit all the terminal devices in the service area from initiating random access.

With reference to the first aspect, in some implementations of the first aspect, first duration is sent, where the first duration is duration in which access of a terminal device in each first area in the at least one first area is allowed or prohibited.

In this technical solution, the first network device configures, for the terminal device, duration in which access is allowed or prohibited, so that the terminal device can reduce, based on duration information, power consumption for receiving a broadcast signal.

With reference to the first aspect, in some implementations of the first aspect, the method further includes: sending second indication information, where the second indication information indicates the terminal device to initiate random access to a second network device.

With reference to the first aspect, in some implementations of the first aspect, first resource information is sent to the terminal device, where the first resource information is used by the terminal device to initiate random access to the second network device.

With reference to the first aspect, in some implementations of the first aspect, the first resource information is used by the terminal device to initiate random access to the second network device based on priority information.

In this solution, a communication requirement of a terminal device with a high priority or a terminal device with a high service priority can be ensured, and user experience can be ensured.

With reference to the first aspect, in some implementations of the first aspect, third indication information is sent, where the third indication information indicates ephemeris information and/or service time information of the second network device.

In this solution, resource allocation between different satellites can be optimized, and storage overheads between different satellites can be balanced.

According to a second aspect, a communication method is provided. The method may be performed by a terminal device, or may be performed by a chip or a circuit configured in the terminal device. This is not limited in this application.

The method includes: receiving first indication information, where the first indication information indicates that access of a terminal device in at least one first area is allowed or prohibited, first areas in the at least one first area do not overlap, and the first area is a part of a service area of a first network device; and determining, based on the first indication information, whether to initiate access to the first network device.

In this application, the first network device sends broadcast signals to the service area. The service area includes different areas (referred to as sub-areas below for ease of description). The different sub-areas may be understood as follows: The service area of the first network device is divided into a plurality of non-overlapping areas, for example, an area #a and an area #b. Broadcast signals in different sub-areas have different directions, and broadcast signals in different directions correspond to different indexes. In other words, the first network device sends, to different sub-areas, broadcast signals indicated by different indexes.

The first area may be understood as a part of the service area of the first network device. In other words, the first area is a sub-area included in the service area, or may be understood as a part of a cell area. This is not limited in this application.

Based on the foregoing technical solution, the terminal device receives the first indication information of the first network device, and determines, based on the indication information, whether access is allowed. It may be understood that the terminal device in the service area of the first network device may initiate random access to the first network device. However, storage space of the first network device is limited. Once a plurality of terminal devices simultaneously initiate random access to the first network device, storage pressure of the first network device reaches a saturated state, and data of the terminal devices cannot be stored, causing a communication fault. In this application, before the terminal devices initiate random access, the first network device performs access control on terminal devices in some areas in the service area, to prevent all terminal devices or a plurality of terminal devices in the service area from accessing the first network device, which causes storage pressure of the first network device and affects system communication quality.

With reference to the second aspect, in some implementations of the second aspect, each first area in the at least one first area is a coverage area of a first broadcast signal indicated by a first index, and the first indication information indicates that access of a terminal device that receives the first broadcast signal indicated by the first index is allowed or prohibited.

In this solution, the terminal device in the first area receives the first broadcast signal indicated by the first index, in other words, a broadcast signal received by the terminal device in the first area is the first broadcast signal indicated by the first index. The first indication information indicates that access of the terminal device that receives the first broadcast signal indicated by the first index is allowed or prohibited.

With reference to the second aspect, in some implementations of the second aspect, the first indication information has an association relationship with the first index.

In this technical solution, the first indication information corresponds to the first index, and the terminal device may determine, based on a correspondence between the first indication information and the first index, that access of the terminal device that receives the broadcast signal indicated by the first index is allowed or prohibited.

With reference to the second aspect, in some implementations of the second aspect, first duration is received, where the first duration is duration in which access of a terminal device in each first area in the at least one first area is allowed or prohibited.

In this technical solution, the terminal device determines, based on duration information, duration in which access is allowed or prohibited, so that power consumption for obtaining a broadcast signal can be reduced.

With reference to the second aspect, in some implementations of the second aspect, second indication information is received; and when it is determined based on the first indication information that access to the first network device is prohibited, or when the first terminal device fails to access the first network device, random access is initiated to a second network device based on the second indication information.

With reference to the second aspect, in some implementations of the second aspect, first resource information is received, and random access is initiated to the second network device based on the first resource information.

With reference to the second aspect, in some implementations of the second aspect, random access is initiated to the second network device based on priority information.

In this solution, a communication requirement of a terminal device with a high priority or a terminal device with a high service priority can be ensured, and user experience can be ensured.

With reference to the second aspect, in some implementations of the second aspect, third indication information is received, where the third indication information indicates ephemeris information and/or service time information of the second network device.

In this solution, resource allocation between different satellites can be optimized, and storage overheads between different satellites can be balanced.

According to a third aspect, a communication method is provided. The method may be performed by a first network device, or may be performed by a chip or a circuit configured in the first network device. This is not limited in this application.

The method includes: determining fourth indication information based on a random access request of a terminal device, where the fourth indication information indicates whether access of the terminal device is allowed; and sending the fourth indication information.

In this application, the first network device sends broadcast signals to a service area. Correspondingly, the terminal device in the service area receives the broadcast signal.

A manner in which the first network device sends the broadcast signal to the service area is not limited.

Based on the foregoing technical solution, the first network device may determine, based on the random access request initiated by the terminal device, whether to prohibit access of the terminal device, and indicate, to the corresponding terminal device by using downlink signaling, whether access of the terminal device is prohibited. It may be understood that the terminal device in the service area of the first network device may access the first network device, but storage space of the first network device is limited. Once a plurality of terminal devices simultaneously access the first network device, storage pressure of the first network device reaches a saturated state, and data of the terminal devices cannot be stored, causing a communication fault. In this application, when the terminal devices initiate random access, the first network device determines, based on an access contention status, whether access is allowed, so that the first network device can more accurately perform access control on terminal devices in some areas in the service area, to prevent all terminal devices or a plurality of terminal devices in the service area from accessing the first network device, which causes storage pressure of the first network device and affects system communication quality.

With reference to the third aspect, in some implementations of the third aspect, second duration is sent, where the second duration indicates duration in which access of the terminal device is allowed or prohibited.

In this technical solution, the first network device configures, for the terminal device, duration in which access is allowed or prohibited, so that the terminal device can reduce, based on duration information, power consumption for receiving a broadcast signal.

With reference to the third aspect, in some implementations of the third aspect, the method further includes: sending fifth indication information, where the fifth indication information indicates the terminal device to initiate random access to a second network device.

With reference to the third aspect, in some implementations of the third aspect, first resource information is sent, where the first resource information is used by the terminal device to initiate random access to the second network device.

With reference to the third aspect, in some implementations of the third aspect, the first resource information is used by the terminal device to initiate random access to the second network device based on priority information.

In this solution, a communication requirement of a terminal device with a high priority or a terminal device with a high service priority can be ensured, and user experience can be ensured.

With reference to the third aspect, in some implementations of the third aspect, sixth indication information is sent, where the sixth indication information indicates ephemeris information and/or service time information of the second network device.

In this solution, resource allocation between different satellites can be optimized, and storage overheads between different satellites can be balanced.

According to a fourth aspect, a communication method is provided. The method may be performed by a terminal device, or may be performed by a chip or a circuit configured in the terminal device. This is not limited in this application.

The method includes: sending a random access request; receiving fourth indication information; and determining, based on the fourth indication information, whether to access a first network device.

In this application, the first network device sends broadcast signals to a service area. Correspondingly, the terminal device in the service area receives the broadcast signal.

A manner in which the first network device sends the broadcast signal to the service area is not limited.

Based on the foregoing technical solution, after initiating the random access request to the first network device, the terminal device receives the fourth indication information sent by the first network device, and determines, based on the fourth indication information, whether access of the terminal device is prohibited. It may be understood that the terminal device in the service area of the first network device may access the first network device, but storage space of the first network device is limited. Once a plurality of terminal devices simultaneously access the first network device, storage pressure of the first network device reaches a saturated state, and data of the terminal devices cannot be stored, causing a communication fault. In this application, when the terminal devices initiate random access, the first network device determines, based on an access contention status, whether access is allowed, so that the first network device can more accurately perform access control on terminal devices in some areas in the service area, to prevent all terminal devices or a plurality of terminal devices in the service area from accessing the first network device, which causes storage pressure of the first network device and affects system communication quality.

With reference to the fourth aspect, in some implementations of the fourth aspect, second duration is received, where the second duration indicates duration in which access of the terminal device is allowed or prohibited.

In this technical solution, the terminal device can reduce, based on the configured duration in which access is allowed or prohibited, power consumption for receiving a broadcast signal.

With reference to the fourth aspect, in some implementations of the fourth aspect, fifth indication information is received; and when it is determined based on the fourth indication information that access to the first network device is prohibited, or when the first terminal device fails to access the first network device, random access is initiated to a second network device based on the fifth indication information.

With reference to the fourth aspect, in some implementations of the fourth aspect, first resource information is received, and random access is initiated to the second network device based on the first resource information.

With reference to the fourth aspect, in some implementations of the fourth aspect, random access is initiated to the second network device based on priority information.

In this solution, a communication requirement of a terminal device with a high priority or a terminal device with a high service priority can be ensured, and user experience can be ensured.

With reference to the fourth aspect, in some implementations of the fourth aspect, sixth indication information is received, where the sixth indication information indicates ephemeris information and/or service time information of the second network device.

In this solution, resource allocation between different satellites can be optimized, and storage overheads between different satellites can be balanced.

According to a fifth aspect, a communication method is provided. The method may be performed by a first network device, or may be performed by a chip or a circuit configured in the first network device. This is not limited in this application.

The method includes: determining seventh indication information based on a storage status of the first network device, where the seventh indication information includes a storage status level of the first network device; and sending the seventh indication information.

In this application, the first network device sends broadcast signals to a service area. Correspondingly, a terminal device in the service area receives the broadcast signal.

A manner in which the first network device sends the broadcast signal to the service area is not limited.

Based on the foregoing technical solution, the first network device may indicate the storage status level to the terminal device. The storage status level may be used as auxiliary information for the terminal device to determine whether to access the first network device. In other words, the terminal device determines storage space of the first network device based on the storage status level, and determines, based on a size of the storage space, whether to access the first network device. Therefore, access control can be implemented more accurately on a terminal device side. Further, the terminal may determine, with reference to a priority or a service priority of the terminal, whether to access the first network device, to ensure smooth execution of a service with a high priority, and ensure user experience.

With reference to the fifth aspect, in some implementations of the fifth aspect, the seventh indication information is used by the terminal device to determine whether to initiate random access.

With reference to the fifth aspect, in some implementations of the fifth aspect, third duration is sent, where the third duration is validity duration of the seventh indication information.

In this technical solution, the first network device configures duration of the storage status level for the terminal device, so that the terminal device can reduce, based on duration information, power consumption for obtaining the broadcast signal.

With reference to the fifth aspect, in some implementations of the fifth aspect, an access request is received from the terminal device, where the access request includes a service type; and an access allowed message or an access rejected message is sent based on the service type.

In this solution, a communication requirement of a terminal device with a high priority or a terminal device with a high service priority can be ensured, and user experience can be ensured.

With reference to the fifth aspect, in some implementations of the fifth aspect, the method further includes: sending eighth indication information, where the eighth indication information indicates the terminal device to initiate random access to a second network device.

With reference to the fifth aspect, in some implementations of the fifth aspect, first resource information is sent, where the first resource information is used by the terminal device to initiate random access to the second network device.

With reference to the fifth aspect, in some implementations of the fifth aspect, the first resource information is used by the terminal device to initiate random access to the second network device based on priority information.

In this solution, a communication requirement of a terminal device with a high priority or a terminal device with a high service priority can be ensured, and user experience can be ensured.

With reference to the fifth aspect, in some implementations of the fifth aspect, ninth indication information is sent, where the ninth indication information indicates ephemeris information and/or service time information of the second network device.

In this solution, resource allocation between different satellites can be optimized, and storage overheads between different satellites can be balanced.

According to a sixth aspect, a communication method is provided. The method may be performed by a terminal device, or may be performed by a chip or a circuit configured in the terminal device. This is not limited in this application.

The method includes: receiving seventh indication information, where the seventh indication information includes a storage status level of a first network device; and determining, based on the first indication information, whether to initiate random access.

In this application, the first network device sends broadcast signals to a service area. Correspondingly, the terminal device in the service area receives the broadcast signal.

A manner in which the first network device sends the broadcast signal to the service area is not limited.

Based on the foregoing technical solution, the terminal device receives the storage status level indicated by the first network device. The storage status level may be used as auxiliary information for the terminal device to determine whether to access the first network device. In other words, the terminal device determines storage space of the first network device based on the storage status level, and determines, based on a size of the storage space, whether to access the first network device. Therefore, access control can be implemented more accurately on a terminal device side. Further, the terminal may determine, with reference to a priority or a service priority of the terminal, whether to access the first network device, to ensure smooth execution of a service with a high priority, and ensure user experience.

With reference to the sixth aspect, in some implementations of the sixth aspect, third duration is received, where the third duration is validity duration of the seventh indication information.

In this technical solution, the first network device configures duration of the storage status level for the terminal device, so that the terminal device can reduce, based on duration information, power consumption for obtaining the broadcast signal.

With reference to the sixth aspect, in some implementations of the sixth aspect, an access request is sent, where the access request includes a service type; and an access allowed message or an access rejected message is received.

With reference to the sixth aspect, in some implementations of the sixth aspect, the method further includes: receiving eighth indication information; and when it is determined based on the seventh indication information that access to the first network device is prohibited, or when the first terminal device fails to access the first network device, initiating random access to a second network device based on the eighth indication information.

In this solution, a communication requirement of a terminal device with a high priority or a terminal device with a high service priority can be ensured, and user experience can be ensured.

With reference to the sixth aspect, in some implementations of the sixth aspect, first resource information is received, where the first resource information is used by the terminal device to initiate random access to the second network device.

With reference to the sixth aspect, in some implementations of the sixth aspect, random access is initiated to the second network device based on priority information.

In this solution, a communication requirement of a terminal device with a high priority or a terminal device with a high service priority can be ensured, and user experience can be ensured.

With reference to the sixth aspect, in some implementations of the sixth aspect, ninth indication information is received, where the ninth indication information indicates ephemeris information and/or service time information of the second network device.

In this solution, resource allocation between different satellites can be optimized, and storage overheads between different satellites can be balanced.

According to a seventh aspect, a communication apparatus is provided. The apparatus may be a first network device, or may be a chip or a circuit configured in the first network device. This is not limited in this application.

The apparatus includes: a processing unit, configured to determine first indication information, where the first indication information indicates that access of a terminal device in at least one first area is allowed or prohibited, each first area in the at least one first area does not overlap another first area, and the first area is a part of a service area of the first network device; and a transceiver unit, configured to send the first indication information.

With reference to the seventh aspect, in some implementations of the seventh aspect, each first area in the at least one first area is a coverage area of a first broadcast signal indicated by a first index, and the first indication information indicates that access of a terminal device that receives the first broadcast signal indicated by the first index is allowed or prohibited.

With reference to the seventh aspect, in some implementations of the seventh aspect, the first network device indicates, by using the first indication information, that access to some sub-areas in the service area (including different sub-areas) is allowed or prohibited.

In a possible implementation, the first network device indicates, by using the first indication information, that access to some sub-areas in the service area (including different sub-areas) is allowed, and access to some sub-areas in the service area is prohibited.

With reference to the seventh aspect, in some implementations of the seventh aspect, the first indication information has an association relationship with the first index.

With reference to the seventh aspect, in some implementations of the seventh aspect, the first area is a coverage area of a first broadcast signal corresponding to a first direction.

With reference to the seventh aspect, in some implementations of the seventh aspect, the first indication information indicates that access of the terminal device that receives the first broadcast signal corresponding to the first direction is allowed or prohibited.

With reference to the seventh aspect, in some implementations of the seventh aspect, the processing unit is further configured to determine the first indication information based on a storage status of the first network device.

With reference to the seventh aspect, in some implementations of the seventh aspect, the processing unit is further configured to determine, based on the storage status of the first network device, that some or all terminal devices in a service range may be allowed to initiate random access.

With reference to the seventh aspect, in some implementations of the seventh aspect, when the storage space of the first network device is sufficient, the processing unit is further configured to allow all the terminal devices in the service area to initiate random access.

With reference to the seventh aspect, in some implementations of the seventh aspect, when the storage space of the first network device is severely insufficient, the first network device may prohibit all the terminal devices in the service area from initiating random access.

With reference to the seventh aspect, in some implementations of the seventh aspect, the transceiver unit is further configured to send first duration, where the first duration is duration in which access of a terminal device in each first area in the at least one first area is allowed or prohibited.

With reference to the seventh aspect, in some implementations of the seventh aspect, the transceiver unit is further configured to send second indication information, where the second indication information indicates the terminal device to initiate random access to a second network device.

With reference to the seventh aspect, in some implementations of the seventh aspect, the transceiver unit is further configured to send first resource information to the terminal device, where the first resource information is used by the terminal device to initiate random access to the second network device.

With reference to the seventh aspect, in some implementations of the seventh aspect, the first resource information is used by the terminal device to initiate random access to the second network device based on priority information.

With reference to the seventh aspect, in some implementations of the seventh aspect, the transceiver unit is further configured to send third indication information, where the third indication information indicates ephemeris information and/or service time information of the second network device.

According to an eighth aspect, a communication apparatus is provided. The apparatus may be a terminal device, or may be a chip or a circuit configured in the terminal device. This is not limited in this application.

The apparatus includes: a transceiver unit, configured to receive first indication information, where the first indication information indicates that access of a terminal device in at least one first area is allowed or prohibited, first areas in the at least one first area do not overlap, and the first area is a part of a service area of a first network device; and a processing unit, configured to determine, based on the first indication information, whether to initiate access to the first network device.

With reference to the eighth aspect, in some implementations of the eighth aspect, each first area in the at least one first area is a coverage area of a first broadcast signal indicated by a first index, and the first indication information indicates that access of a terminal device that receives the first broadcast signal indicated by the first index is allowed or prohibited.

With reference to the eighth aspect, in some implementations of the eighth aspect, the first indication information has an association relationship with the first index.

With reference to the eighth aspect, in some implementations of the eighth aspect, the transceiver unit is further configured to receive first duration, where the first duration is duration in which access of a terminal device in each first area in the at least one first area is allowed or prohibited.

With reference to the eighth aspect, in some implementations of the eighth aspect, the transceiver unit is further configured to receive second indication information; and the processing unit is further configured to: when it is determined based on the first indication information that access to the first network device is prohibited, or when the first terminal device fails to access the first network device, initiate random access to a second network device based on the second indication information.

With reference to the eighth aspect, in some implementations of the eighth aspect, the transceiver unit is further configured to receive first resource information, and the processing unit is further configured to initiate random access to the second network device based on the first resource information.

With reference to the eighth aspect, in some implementations of the eighth aspect, the processing unit is further configured to initiate random access to the second network device based on priority information.

With reference to the eighth aspect, in some implementations of the eighth aspect, the transceiver unit is further configured to receive third indication information, where the third indication information indicates ephemeris information and/or service time information of the second network device.

According to a ninth aspect, a communication apparatus is provided. The apparatus may be a first network device, or may be a chip or a circuit configured in the first network device. This is not limited in this application.

The apparatus includes: a processing unit, configured to determine fourth indication information based on a random access request of a terminal device, where the fourth indication information indicates whether access of the terminal device is allowed; and a transceiver unit, configured to send the fourth indication information.

With reference to the ninth aspect, in some implementations of the ninth aspect, the transceiver unit is further configured to send second duration, where the second duration indicates duration in which access of the terminal device is allowed or prohibited.

With reference to the ninth aspect, in some implementations of the ninth aspect, the transceiver unit is further configured to send fifth indication information, where the fifth indication information indicates the terminal device to initiate random access to a second network device.

With reference to the ninth aspect, in some implementations of the ninth aspect, the transceiver unit is further configured to send first resource information, where the first resource information is used by the terminal device to initiate random access to the second network device.

With reference to the ninth aspect, in some implementations of the ninth aspect, the first resource information is used by the terminal device to initiate random access to the second network device based on priority information.

With reference to the ninth aspect, in some implementations of the ninth aspect, the transceiver unit is further configured to send sixth indication information, where the sixth indication information indicates ephemeris information and/or service time information of the second network device.

According to a tenth aspect, a communication apparatus is provided. The apparatus may be a terminal device, or may be a chip or a circuit configured in the terminal device. This is not limited in this application.

The apparatus includes: a transceiver unit, configured to send a random access request, where the transceiver unit is further configured to receive fourth indication information; and a processing unit, configured to determine, based on the fourth indication information, whether to access a first network device.

With reference to the tenth aspect, in some implementations of the tenth aspect, the transceiver unit is further configured to receive second duration, where the second duration indicates duration in which access of the terminal device is allowed or prohibited.

With reference to the tenth aspect, in some implementations of the tenth aspect, the transceiver unit is further configured to receive fifth indication information; and the processing unit is further configured to: when it is determined based on the fourth indication information that access to the first network device is prohibited, or when the first terminal device fails to access the first network device, initiate random access to a second network device based on the fifth indication information.

With reference to the tenth aspect, in some implementations of the tenth aspect, the transceiver unit is further configured to receive first resource information, and the processing unit is further configured to initiate random access to the second network device based on the first resource information.

With reference to the tenth aspect, in some implementations of the tenth aspect, the processing unit is further configured to initiate random access to the second network device based on priority information.

With reference to the tenth aspect, in some implementations of the tenth aspect, the transceiver unit is further configured to receive sixth indication information, where the sixth indication information indicates ephemeris information and/or service time information of the second network device.

According to an eleventh aspect, a communication apparatus is provided. The apparatus may be a first network device, or may be a chip or a circuit configured in the first network device. This is not limited in this application.

The apparatus includes: a processing unit, configured to determine seventh indication information based on a storage status of the first network device, where the seventh indication information includes a storage status level of the first network device; and a transceiver unit, configured to send the seventh indication information.

With reference to the eleventh aspect, in some implementations of the eleventh aspect, the seventh indication information is used by a terminal device to determine whether to initiate random access.

With reference to the eleventh aspect, in some implementations of the eleventh aspect, the transceiver unit is further configured to send third duration, where the third duration is validity duration of the seventh indication information.

With reference to the eleventh aspect, in some implementations of the eleventh aspect, the transceiver unit is further configured to receive an access request from the terminal device, where the access request includes a service type; and the processing unit is further configured to send an access allowed message or an access rejected message based on the service type.

With reference to the eleventh aspect, in some implementations of the eleventh aspect, the transceiver unit is further configured to send eighth indication information, where the eighth indication information indicates the terminal device to initiate random access to a second network device.

With reference to the eleventh aspect, in some implementations of the eleventh aspect, the transceiver unit is further configured to send first resource information, where the first resource information is used by the terminal device to initiate random access to the second network device.

With reference to the eleventh aspect, in some implementations of the eleventh aspect, the first resource information is used by the terminal device to initiate random access to the second network device based on priority information.

With reference to the eleventh aspect, in some implementations of the eleventh aspect, the transceiver unit is further configured to send ninth indication information, where the ninth indication information indicates ephemeris information and/or service time information of the second network device.

According to a twelfth aspect, a communication apparatus is provided. The apparatus may be a terminal device, or may be a chip or a circuit configured in the terminal device. This is not limited in this application.

The apparatus includes: a transceiver unit, configured to receive seventh indication information, where the seventh indication information includes a storage status level of a first network device; and a processing unit, configured to determine, based on the first indication information, whether to initiate random access.

With reference to the twelfth aspect, in some implementations of the twelfth aspect, the transceiver unit is further configured to receive third duration, where the third duration is validity duration of the seventh indication information.

With reference to the twelfth aspect, in some implementations of the twelfth aspect, the transceiver unit is further configured to send an access request, where the access request includes a service type; and the transceiver unit is further configured to receive an access allowed message or an access rejected message.

With reference to the twelfth aspect, in some implementations of the twelfth aspect, the transceiver unit is further configured to receive eighth indication information; and the processing unit is further configured to: when it is determined based on the seventh indication information that access to the first network device is prohibited, or when the first terminal device fails to access the first network device, initiate random access to a second network device based on the eighth indication information.

With reference to the twelfth aspect, in some implementations of the twelfth aspect, the transceiver unit is further configured to receive first resource information, where the first resource information is used by the terminal device to initiate random access to the second network device.

With reference to the twelfth aspect, in some implementations of the twelfth aspect, the processing unit is further configured to initiate random access to the second network device based on priority information.

With reference to the twelfth aspect, in some implementations of the twelfth aspect, the transceiver unit is further configured to receive ninth indication information, where the ninth indication information indicates ephemeris information and/or service time information of the second network device.

According to a thirteenth aspect, a communication apparatus is provided. The apparatus is configured to perform the method according to any one of the first aspect to the sixth aspect. Specifically, the communication apparatus may include a unit and/or a module configured to perform the method according to any one of the implementations of any one of the first aspect to the sixth aspect, for example, a processing unit and/or a communication unit.

In an implementation, the communication apparatus includes a communication unit and a processing unit. The communication unit may be a transceiver or an input/output interface. The processing unit may be at least one processor. Optionally, the transceiver may be a transceiver circuit. Optionally, the input/output interface may be an input/output circuit.

In another implementation, the communication apparatus is a chip, a chip system, or a circuit in a network device. When the communication apparatus is the chip, the chip system, or the circuit in the network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a fourteenth aspect, a communication apparatus is provided. The apparatus includes a processor, and optionally, further includes a memory. The processor is configured to control a transceiver to receive and send signals, the memory is configured to store a computer program, and the processor is configured to invoke the computer program from the memory and run the computer program, so that the communication apparatus is enabled to perform the method according to any one of the possible implementations of any one of the first aspect to the sixth aspect.

Optionally, there are one or more processors, and there are one or more memories.

Optionally, the memory and the processor may be integrated together, or the memory and the processor may be separately disposed.

Optionally, the network device further includes the transceiver. The transceiver may be specifically a transmitting machine (transmitter) and a receiving machine (receiver).

According to a fifteenth aspect, a computer-readable storage medium is provided. The computer-readable storage medium stores a computer program or code. When the computer program or code is run on a computer, the computer is enabled to perform the method according to any one of the possible implementations of any one of the first aspect to the sixth aspect.

According to a sixteenth aspect, a chip is provided. The chip includes at least one processor. The at least one processor is coupled to a memory. The memory is configured to store a computer program. The processor is configured to invoke the computer program from the memory and run the computer program, so that a sending device on which the chip system is installed performs the method according to any one of the possible implementations of any one of the first aspect to the sixth aspect.

The chip may include an input circuit or interface configured to send information or data, and an output circuit or interface configured to receive information or data.

According to a seventeenth aspect, a computer program product is provided. The computer program product includes computer program code. When the computer program code is run by a sending device, the method according to any one of the possible implementations of any one of the first aspect to the sixth aspect is performed.

For beneficial effect of the seventh aspect to the seventeenth aspect, refer to the beneficial effect of the first aspect to the sixth aspect. Details are not described again.

### BRIEF DESCRIPTION OF DRAWINGS

FIG. 1 is a diagram of an architecture 100 of a communication system applicable to an embodiment of this application;
FIG. 2 is a diagram of an architecture 200 of a communication system applicable to an embodiment of this application;
FIG. 3 is a diagram of an architecture 300 of a communication system applicable to an embodiment of this application;
FIG. 4 is a diagram of an architecture 400 of a communication system applicable to an embodiment of this application;
FIG. 5 is a diagram of an architecture 500 of a communication system applicable to an embodiment of this application;
FIG. 6 is a schematic flowchart of a communication method applicable to an embodiment of this application;
FIG. 7 is a schematic flowchart of a communication method applicable to an embodiment of this application;
FIG. 8 is a schematic flowchart of a communication method applicable to an embodiment of this application;
FIG. 9 is a block diagram of a structure of a communication apparatus applicable to an embodiment of this application; and
FIG. 10 is a block diagram of a structure of a communication apparatus applicable to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC) system, an internet of things (internet of things, IoT) communication system, or another communication system.

The following clearly and completely describes technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts fall within the protection scope of this application.

A communication system applicable to this application is first briefly described below.

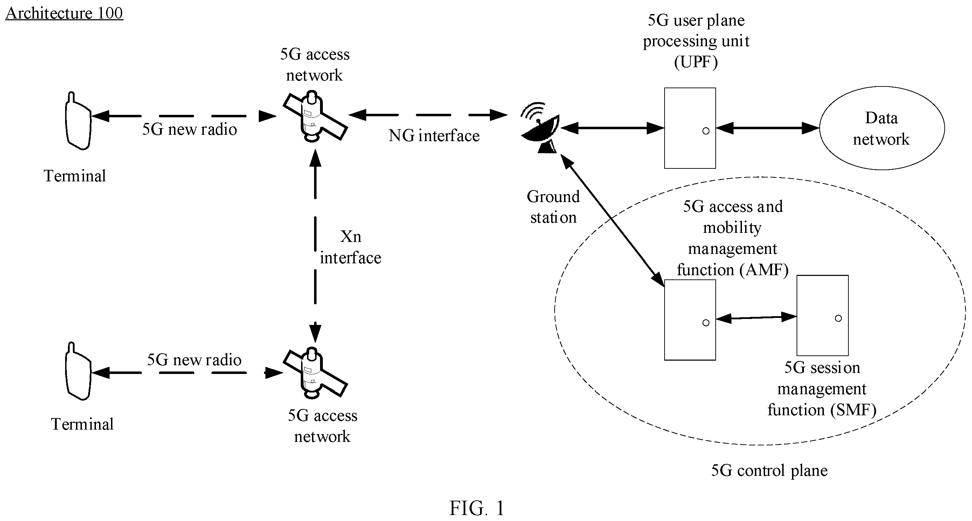

FIG. 1 is a diagram of an architecture 100 of a communication system applicable to an embodiment of this application. As shown in FIG. 1, a terrestrial mobile terminal UE accesses a network through 5G new radio. A 5G access network device is deployed on a satellite, and is connected to a terrestrial core network through a radio link. In addition, there is a radio link between satellites, to implement signaling exchange and user data transmission between access network devices. Network elements in FIG. 1 and interfaces of the network elements are described below.

A terminal device is a mobile device that supports 5G new radio. Typical examples are a mobile phone and a pad. The terminal device may access a satellite network through an air interface and initiate a service, for example, a call or network access.

A 5G access network device mainly provides a radio access service, schedules a radio resource for an access terminal, provides a reliable wireless transmission protocol and data encryption protocol, and the like, and is, for example, a base station.

A 5G core network provides services such as user access control, mobility management, session management, user security authentication, and charging. The 5G core network includes a plurality of functional units, and may be divided into a control plane functional entity and a data plane functional entity. An access and mobility management unit (access and mobility management function, AMF) is responsible for user access management, security authentication, and mobility management. A user plane unit (user plane function, UPF) is responsible for managing functions such as user plane data transmission and traffic statistics collection.

A ground station is responsible for forwarding signaling and service data between a satellite access network device and the 5G core network.

5G new radio is a radio link between the terminal and the access network device.

An Xn interface is an interface between 5G access network devices, and is mainly used for signaling exchange such as handover.

An NG interface is an interface between the 5G access network device and the 5G core network, and is mainly used to exchange signaling such as higher layer signaling (non-access stratum, NAS) of the core network and service data of a user.

In a non-terrestrial network (non-terrestrial network, NTN), a plurality of NTN-based RAN architectures (NTN-RAN architectures) are defined. The following uses examples to describe RAN architectures applicable to the NTN.

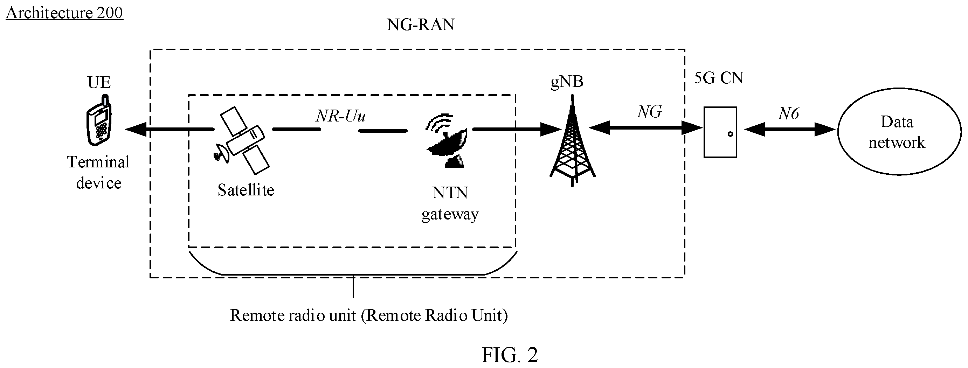

FIG. 2 is a diagram of an architecture 200 of a communication system applicable to an embodiment of this application. A name of the architecture shown in FIG. 2 is a RAN architecture with a transparent satellite (RAN architecture with transparent satellite). As shown in FIG. 2, in a transparent (transparent) transmission scenario, a satellite is used to implement frequency conversion and radio frequency amplification, and is equivalent to an analog radio frequency repeater. Therefore, the satellite replicates an NR-Uu radio interface signal from a feeder link (feeder link) (between an NTN gateway and the satellite) to a service link (service link) (between the satellite and UE), and vice versa. An NR-Uu interface signal is transmitted over a satellite radio interface (satellite radio interface, SRI) on the feeder link, in other words, the satellite does not terminate the NR-Uu interface signal, but replicates the signal. The NTN gateway supports all necessary functions for forwarding the NR-Uu interface signal. Different transmission satellites may be connected to a same terrestrial gNB.

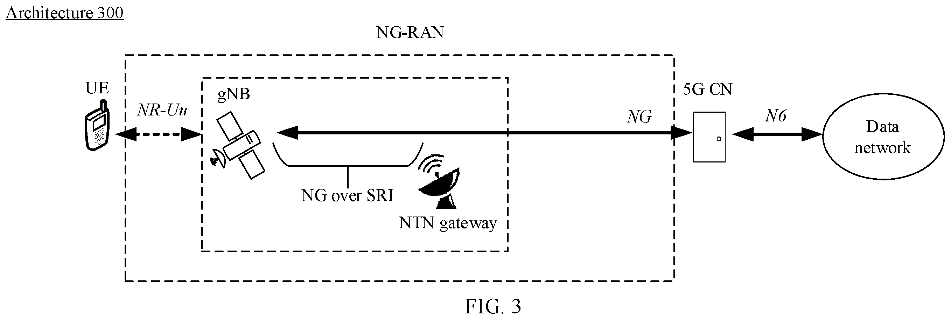

FIG. 3 is a diagram of another architecture 300 of a communication system applicable to an embodiment of this application. A name of the architecture shown in FIG. 3 is a regenerative satellite without an inter-satellite link (regenerative satellite without ISL (inter-satellite link, inter-satellite link)). In this architecture, a satellite serves as a base station to regenerate a signal received from the ground. To be specific, an NR-Uu radio interface signal is transmitted on a service link between UE and the satellite, and a satellite radio interface (SRI) signal is transmitted on a feeder link between an NTN gateway and the satellite. An SRI is a transmission link between the NTN gateway and the satellite. An NG interface signal is transmitted to the NTN gateway through the SRI, and then forwarded by the NTN gateway to a terrestrial core network device. A process of transmitting an NG interface signal from the terrestrial core network device to the satellite base station is similar, and details are not described herein again.

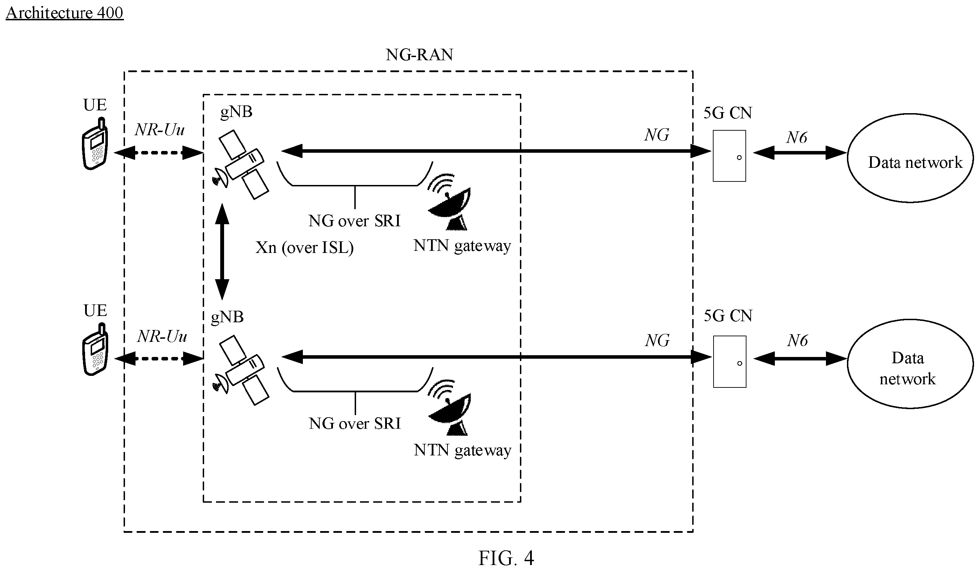

FIG. 4 is a diagram of another architecture 400 of a communication system applicable to an embodiment of this application. A name of the architecture shown in FIG. 4 is a regenerative satellite with an inter-satellite link (regenerative satellite with ISL). In this scenario, a satellite also serves as a base station. A difference from the previous scenario is that an ISL exists in this scenario. The ISL is a transmission link between satellites. As shown in the foregoing figure, UE served by a base station on a satellite can access a 5G core network through an ISL. Base stations on different satellites may be connected to a same terrestrial 5G core network.

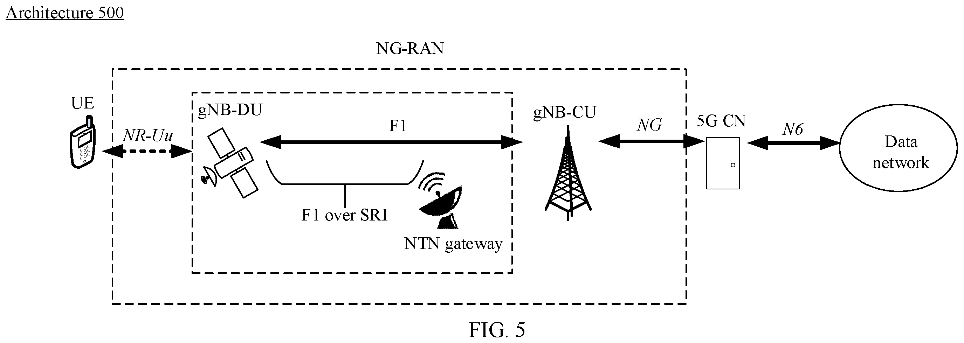

FIG. 5 is a diagram of another architecture 500 of a communication system applicable to an embodiment of this application. A name of the architecture shown in FIG. 5 is an NG-RAN with a regenerative satellite based on a gNB-DU (NG-RAN with a regenerative satellite based on gNB-DU). In this scenario, a CU and a DU of a base station are separated. The DU of the base station is deployed on a satellite. The satellite regenerates a signal received from the ground. To be specific, an NR-Uu radio interface signal is transmitted on a service link between UE and the satellite, and a satellite radio interface (SRI) signal is transmitted on a feeder link between an NTN gateway and the satellite. A satellite radio interface is a transmission link, and can transmit a logical interface F1 signal in compliance with a 3GPP standard. An F1 protocol signal is transmitted over the satellite radio interface. The satellite can provide an inter-satellite link ISL. The NTN gateway is a node at a transport network layer and supports all necessary transport protocols. DUs on different satellites may be connected to a same terrestrial CU.

It should be noted that the foregoing RAN architectures are merely examples for description, and may be further used in another NTN architecture, or in 4G, 5G, or a future wireless network architecture. This is not limited in embodiments of this application.

In the NTN, communication between satellites may fail due to an excessively long distance between the satellites. When the satellite communicates with a terminal, data of the terminal needs to be first stored on the satellite, and when the satellite moves into a position at which a core network is present, the data of the terminal that is stored on the satellite is sent to the core network. When storage pressure of the satellite reaches saturation, an access storm of the terminal device may occur.

In view of this, embodiments of this application provide a communication solution, to implement access control on a terminal device while taking a storage capability of a satellite into account.

With reference to the accompanying drawings, the following describes in detail a communication method provided in embodiments of this application. Embodiments provided in this application may be applied to the communication systems shown in FIG. 1 to FIG. 5. This is not limited.

The following describes in detail the solution of this application.

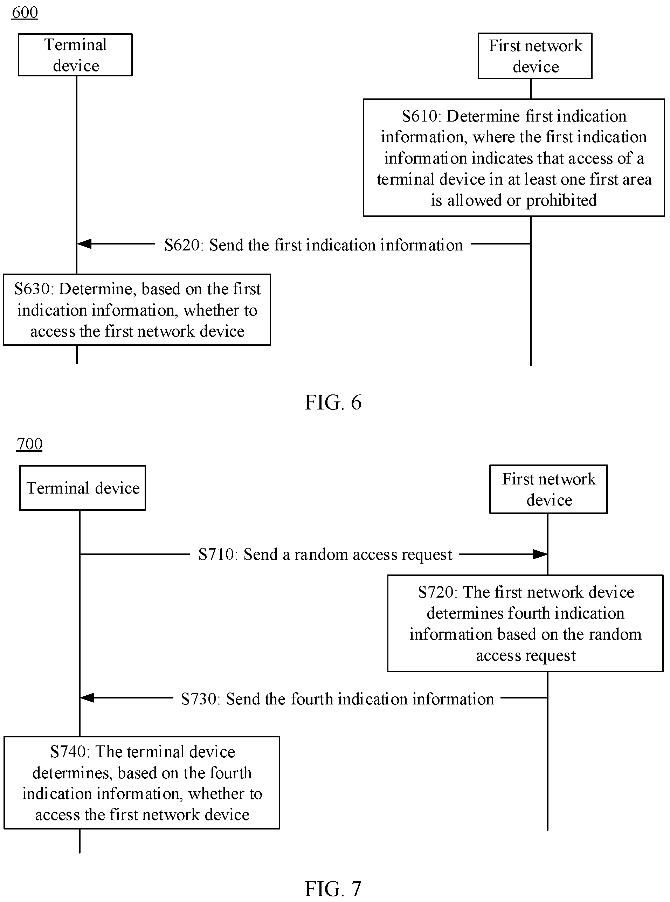

FIG. 6 is a schematic flowchart of a communication method according to an embodiment of this application. For ease of description, the following describes the method 600 by using an example of interaction between execution bodies: a first network device and a terminal device. It may be understood that the terminal device may be a component (for example, a chip or a circuit) of the terminal device, and the first network device may also be a component (for example, a chip or a circuit) of the network device. This is not limited.

In this application, the first network device sends broadcast signals to a service area. The service area includes different areas (referred to as sub-areas below for ease of description). The different sub-areas may be understood as follows: The service area of the first network device is divided into a plurality of non-overlapping areas, for example, an area #a and an area #b. Broadcast signals in different sub-areas have different directions, and broadcast signals in different directions correspond to different indexes. In other words, the first network device sends, to different sub-areas, broadcast signals indicated by different indexes.

Correspondingly, the terminal device in the service area receives the broadcast signal, and directions of broadcast signals received by terminal devices in different sub-areas are different.

A manner in which the first network device sends the broadcast signal to the service area is not limited. For example, the first network device sends the broadcast signal in a synchronization signal block (synchronization signal block, SSB) scanning manner in a conventional technology.

The broadcast signal may be an SSB.

The first network device includes a first satellite or an access network device corresponding to the first satellite. This is not limited in this application.

The method 600 shown in FIG. 6 may include the following steps.

S610: The first network device determines first indication information.

The first indication information indicates that access of a terminal device in at least one first area is allowed or prohibited.

The first area may be understood as a part of the service area of the first network device, in other words, the first area is a sub-area of the service area. The service area may be a cell. This is not limited in this application.

A plurality of first areas do not overlap, in other words, there is no overlapping area between any two first areas. A simpler understanding is that there is no overlapping area between different sub-areas.

It may be understood that the service area of the first network device may be divided into a plurality of non-overlapping sub-areas. The first area is one of the plurality of non-overlapping sub-areas. The plurality of first areas are a plurality of sub-areas in the plurality of non-overlapping sub-areas. For example, the plurality of sub-areas include an area #a, an area #b, ..., an area #z, and the like. The first indication information may indicate one first area, for example, the area #a, or may indicate a plurality of first areas, for example, the area #a, an area #c, and an area #e.

In a possible implementation, the first area is a coverage area of a first broadcast signal, the at least one first area includes one or more different first areas, and different first areas have different coverage areas.

The terminal device in the first area receives the first broadcast signal, and the first broadcast signal corresponds to a first index. In other words, a broadcast signal received by the terminal device in the first area is the first broadcast signal indicated by the first index.

It should be understood that different areas correspond to different indexes of broadcast signals, in other words, broadcast signals sent to different areas have different directions and indexes. For example, the first network device sends a broadcast signal #a to a terminal device in an area #a, where an index of the broadcast signal #a is an index #a, and the area #a is a coverage area of the broadcast signal #a indicated by the index #a; and sends a broadcast signal #b to a terminal device in an area #b, where an index of the broadcast signal #b is an index #b, and the area #b is a coverage area of the broadcast signal #b indicated by the index #b. A sequence number of the broadcast signal and a sequence number of the index are merely examples for ease of understanding. This is not limited in this application.

In a possible implementation, the first indication information indicates that access of the terminal device that receives the first broadcast signal is allowed or prohibited.

It may be understood that the first network device sends different broadcast signals to different sub-areas included in the service area, and the first network device indicates, by using indication information, that access of the terminal device that receives the first broadcast signal is allowed or prohibited. In other words, the first network device performs access control on terminal devices in the different sub-areas by using the first indication information, the first network device performs access control based on the different sent broadcast signals (with different indexes), or the terminal device determines, based on an index of a received broadcast signal and an index indicated by the first indication information, whether the terminal device can access the first network device.

In a possible implementation, the first network device indicates, by using the first indication information, that access to some sub-areas in the service area (including different sub-areas) is allowed or prohibited.

For example, the first network device sends, to a terminal device in an area #a, a broadcast signal #a indicated by an index #a; sends, to a terminal device in an area #b, a broadcast signal #b indicated by an index #b; and sends, to a terminal device in an area #c, a broadcast signal #c indicated by an index #c. It is assumed that the area #a is used as an example of one first area. The first network device sends the first indication information, to indicate that access of a terminal device that receives the broadcast signal #a indicated by the index #a is allowed or prohibited. Correspondingly, the terminal device in the area #a receives the broadcast signal #a indicated by the index #a, and initiates or does not initiate random access to the first network device based on the first indication information.

In a possible implementation, the first network device indicates, by using the first indication information, that access to some sub-areas in the service area (including different sub-areas) is allowed, and access to some sub-areas in the service area is prohibited.

For example, the first network device sends, to a terminal device in an area #a, a broadcast signal #a indicated by an index #a; sends, to a terminal device in an area #b, a broadcast signal #b indicated by an index #b; and sends, to a terminal device in an area #c, a broadcast signal #c indicated by an index #c. It is assumed that the area #a and the area #c are used as an example of two first areas. The first indication information indicates that access of a terminal device that receives the broadcast signal #a indicated by the index #a is allowed, and the first indication information further indicates that access of a terminal device that receives the broadcast signal #c indicated by the index #c is prohibited. Correspondingly, the terminal device in the area #a receives the broadcast signal #a indicated by the index #a, and initiates random access to the first network device based on the first indication information; and the terminal device in the area #c receives the broadcast signal #c indicated by the index #c, and does not initiate random access to the first network device based on the first indication information. A terminal device that receives the broadcast signal #b indicated by the index #b may initiate or may not initiate random access to the first network device. This is not limited in this application.

In a possible implementation, the first indication information has an association relationship with the first index.

Optionally, it is understood that the first indication information corresponds to the first index, and it may be determined based on a correspondence between the first indication information and the first index that access of the terminal device that receives the broadcast signal indicated by the first index is allowed or prohibited.

For example, the first indication information may be a bitmap.

For example, the first network device sends four SSBs to four sub-areas, and indexes of the four SSBs are 0, 1, 2, and 3. The first network device further sends a bitmap "1100". Four bits of the bitmap "1100" respectively correspond to the four SSBs, and the four bits respectively indicate that access of terminal devices that receive the four SSBs may be allowed or prohibited. For example, the bit "1" indicates that access is allowed, and "0" indicates that access is prohibited. In this case, the bitmap"1100" indicates that access of terminal devices that receive broadcast signals indicated by the index 0 and the index 1 is allowed, and access of terminal devices that receive broadcast signals indicated by the index 2 and the index 3 is prohibited. The bit "1" may alternatively indicate that access is prohibited, and "0" may alternatively indicate that access is allowed. This is merely an example for description in this application. This is not limited in embodiments of this application.

It should be noted that the bitmap is merely a possible implementation, and the first indication information may alternatively be in a table form, and a mapping relationship between an index and whether access is allowed is directly indicated in the table form. This is not limited in this application.

In another possible implementation, the first area is a coverage area of a first broadcast signal corresponding to a first direction.

It should be understood that the first network device sends different broadcast signals to different sub-areas in different directions, and terminal devices receive the broadcast signals in different directions. For example, the first network device sends a broadcast signal #a in a direction #a to a terminal device in an area #a, where the area #a is a coverage area of the broadcast signal #a in the direction #a; and sends a broadcast signal #b in a direction #b to an area #b, where the area #b is a coverage area of the broadcast signal #b in the direction #b. A sequence number of the broadcast signal and a sequence number of the direction are merely examples for ease of understanding. This is not limited in this application.

In a possible implementation, the first indication information indicates that access of a terminal device that receives the first broadcast signal corresponding to the first direction is allowed or prohibited.

It may be understood that the first network device sends broadcast signals of different directions to different sub-areas included in the service area, and the first network device indicates, by using indication information, that access of the terminal device that receives the first broadcast signal corresponding to the first direction is allowed or prohibited. In other words, the first network device performs access control on terminal devices in the different sub-areas by using the first indication information, the first network device performs access control based on the different sent broadcast signals (with different directions), or the terminal device determines, based on a direction of a received broadcast signal and an index indicated by the first indication information, whether the terminal device can access the first network device.

The following describes, by using an example, a manner in which the first network device determines the first indication information.

In a possible implementation, the first network device determines the first indication information based on a storage status of the first network device.

It may be understood that the first network device determines, based on the storage status of the first network device, that some or all terminal devices in a service range may be allowed to initiate random access.

For example, when storage space of the first network device is insufficient, the first network device may allow terminal devices in some sub-areas to initiate random access; the first network device may prohibit terminal devices in some sub-areas from initiating random access; or the first network device may allow terminal devices in some sub-areas to initiate random access, and prohibit terminal devices in some other sub-areas from initiating random access.

It may be understood that a terminal device whose access is allowed may be of a user type with a high priority, or may be of a service type with a high priority. Similarly, a terminal device whose access is prohibited may be of a user type with a low priority, or may be of a service type with a low priority. This is not limited in this application.

For example, when the storage space of the first network device is sufficient, the first network device may allow all the terminal devices in the service area to initiate random access.

For example, when the storage space of the first network device is severely insufficient, the first network device may prohibit all the terminal devices in the service area from initiating random access.

For example, the first network device may dynamically indicate, based on a storage space status, that random access of some terminal devices is allowed or random access of some terminal devices is prohibited. For example, when the storage space is sufficient, the first network device may indicate that a terminal device that is previously prohibited to perform random access is allowed to perform random access; and when the storage space is insufficient, the first network device may indicate that a terminal device that is previously allowed to perform random access is prohibited to perform random access. It may be understood that the first network device may continuously adjust access control on the terminal device based on a change of the storage space.

For example, the first indication information indicates that access of a terminal device in an area #a is allowed and access of terminal devices in an area #b and an area #c is prohibited, and the first network device receives data of the terminal device in the area #a. When the storage space of the first network device is sufficient, the first network device resends the first indication information to indicate that access of the terminal devices in the area #b and the area #c is allowed, and the first network device receives data of the terminal devices in the area #b and the area #c. Optionally, when the storage space of the first network device is insufficient, the first network device may resend the first indication information to indicate that access of the terminal devices in the area #b and the area #c is prohibited.

S620: The first network device sends the first indication information to the terminal device.

Correspondingly, the terminal device receives the first indication information.

In this application, the first indication information may be sent together with the broadcast signal by using a broadcast message, or may be sent independently of the broadcast signal. This is not limited in embodiments of this application.

S630: The terminal device determines, based on the first indication information, whether to access the first network device.

There are two cases in which the terminal device receives the first indication information, and indicates, based on the first indication information, whether access is allowed or prohibited.

Case 1: The first indication information indicates that access is allowed.

For example, if the terminal device is located in an area #a, and receives a broadcast signal #a with an index #a, and the terminal device determines, based on the first indication information, that access of a terminal device in the area #a is allowed, the terminal device may initiate a random access procedure.

Optionally, after accessing the first network device, the terminal device may send data on a resource of the first broadcast signal. Correspondingly, the first network device receives the data of the terminal device based on the resource of the first broadcast signal.

After collecting the data of the terminal device, the first network device moves to an area in which a ground station/core network is present, and then lands the data through the ground station and sends the data to the core network.

Case 2: The first indication information indicates that access is prohibited.

For example, if the terminal device is located in an area #b, and receives a broadcast signal #b with an index #b, and the terminal device determines, based on the first indication information, that access of a terminal device in the area #b is prohibited, the terminal device does not initiate an access procedure.

For example, the terminal device may remain in a power saving state. For example, the terminal device may enter an idle state, obtain a synchronization signal of a next satellite, and initiate an access procedure when receiving a broadcast signal indicating that access is allowed.

For example, the terminal device may obtain the synchronization signal of the next satellite based on ephemeris information or auxiliary information of the next satellite. This is not limited in embodiments of this application.

In a possible implementation, the first network device may continuously adjust access control on the terminal device based on a change of the storage space. Correspondingly, the terminal device may initiate access or not initiate access based on an adjustment of access control of the first network device.

For example, the first indication information indicates that access of a terminal device in an area #a is allowed and access of terminal devices in an area #b and an area #c is prohibited, and the terminal device in the area #a sends data to the first network device. When the storage space of the first network device is sufficient, the first network device resends the first indication information to indicate that access of the terminal devices in the area #b and the area #c is allowed, and the terminal devices in the area #b and the area #c send data to the first network device. Optionally, when the storage space of the first network device is insufficient, the first network device may resend the first indication information to indicate that access of the terminal devices in the area #b and the area #c is prohibited, and the terminal devices in the area #b and the area #c stop sending data to the first network device.

Optionally, the terminal device determines an SSB during service time of the first network device, and when a prohibited state corresponding to a direction of the SSB received by the UE is lifted, the terminal device may initiate random access.

In a possible implementation, the first network device sends first duration to the terminal device.

The first duration is duration in which access of a terminal device in each first area in the at least one first area is allowed or prohibited.

Specifically, the first network device may configure validity duration in which access of the terminal corresponding to the first broadcast signal indicated by the first index is prohibited and/or allowed.

For example, for a broadcast signal #a, the first network device configures that access of a terminal device that receives the broadcast signal #a is allowed/prohibited, and configures duration in which access of the terminal device is allowed, a time start point, and a time start reference point. When the terminal device receives the broadcast signal #a and is configured to be allowed to access the first network device, the terminal device initiates access according to a normal procedure, and continues access within the validity duration. When the terminal device receives the broadcast signal #a and is configured to be prohibited from accessing the first network device, the terminal device may initiate access according to a normal procedure after the validity duration.

It may be understood that, when the first duration is validity duration in which access of the terminal device that receives the first broadcast signal is allowed, after the validity duration ends, the first network device may further indicate duration in which access is prohibited, or may continue to indicate duration in which access is allowed. Similarly, when the first duration is validity duration in which access of the terminal device that receives the first broadcast signal is prohibited, after the validity duration ends, the first network device may further indicate duration in which access is allowed, or may continue to indicate duration in which access is prohibited. This is not limited in this application.

In this application, the validity duration may be indicated by using a timer, or may be indicated by using remaining validity duration. This is not limited in embodiments of this application.

If the first network device indicates the remaining validity duration, the first network device may not indicate a start point of the validity duration. This is not limited in embodiments of this application.

In a possible implementation, the first network device may further send second indication information to the terminal device.

The second indication information indicates the terminal device to initiate random access to a second network device.

The second network device includes a second satellite and/or an access network device corresponding to the second satellite.

It may be understood that the first network device may send the second indication information to the terminal device. When the terminal device fails to access the first network device within a service range of the first network device, or the terminal device is prohibited from accessing the first network device, the terminal device may initiate random access to the second network device based on the second indication information.

The second network device may be understood as a network device that replaces the first network device to provide a service. For example, after a satellite #1 flies away, a satellite #2 provides a service.

The second network device may also be understood as a serving satellite in a multi-satellite coordination scenario. For example, serving satellites in a current service area are sequentially a satellite #1, a satellite #2, and a satellite #3. When the satellite #1 indicates to the terminal device that access is not allowed, the satellite #1 may notify the terminal of a satellite that can be accessed, for example, the satellite #3. Although the terminal device may receive a message from the satellite #2, the terminal device skips receiving a synchronization downlink signal from the satellite #2, and initiates access when the satellite #3 provides a service.

In a possible implementation, the first network device may further send first resource information to the terminal device.

The first resource information is used by the terminal device to initiate random access to the second network device.

Correspondingly, the terminal device initiates random access to the second network device based on the first resource information and the second indication information.

In this solution, resource allocation between different satellites can be optimized, and storage overheads between different satellites can be balanced.

Optionally, the terminal device initiates random access to the second network device based on the first resource information and priority information.

Specifically, the terminal device accesses the second network device based on a priority of the terminal device and a priority of a service.

For example, a terminal with a high priority or a terminal device with a high service priority may access the second network device, and a terminal device with a low priority or a terminal device with a low service priority cannot access the second network device.

In this solution, a communication requirement of the terminal device with the high priority or the terminal device with the high service priority can be ensured, and user experience can be ensured.

Optionally, the first network device may further send third indication information to the terminal device.

The third indication information indicates ephemeris information and/or service time information of the second network device.

Correspondingly, the terminal device accesses the second network device based on the ephemeris information and/or the service time information.

In a possible implementation, the terminal device accesses the first network device based on the first indication information sent by the first network device, or accesses the second network device based on the second indication information sent by the first network device. Further, the first network device or the second network device may prohibit the terminal device from sending an uplink signal. For example, due to large storage space pressure, the first network device or the second network device may indicate to the terminal device that sending of the uplink signal is prohibited. It may be understood that the terminal device may receive a downlink signal from the first network device or the second network device.

For example, the terminal device accesses the first network device. The first network device may send tenth indication information to the terminal device, where the tenth indication information indicates to the terminal device that sending of the uplink signal is prohibited. Correspondingly, after receiving the tenth indication information, the terminal device stops sending the uplink signal.

Optionally, the tenth indication information may include time information, for example, effective time. Correspondingly, after receiving the tenth indication information, the terminal device stops sending the uplink signal within the corresponding effective time. Alternatively, the time information includes a time period. After receiving the tenth indication information, the terminal device stops sending the uplink signal within the corresponding time period. It may be understood that after the time period ends, the terminal device may continue to send the uplink signal.

Optionally, the first network device may further send eleventh indication information, to indicate to lift prohibition of sending the uplink signal. Correspondingly, after receiving the eleventh indication information, the terminal device may send the uplink signal. It may be understood that the eleventh indication information may also include effective time or a time period, to indicate specific time or a specific time period for lifting prohibition.

Based on the foregoing technical solution, the first network device may indicate, to a terminal device in one or more first areas in the service area, whether access is allowed. Specifically, the first network device indicates that access of the terminal device that receives the first broadcast signal with the first index is allowed or prohibited, so that access control can be performed on the terminal device in the service area, to prevent all terminal devices in the service area from accessing the first network device, which causes storage pressure of the first network device and affects system communication quality.

FIG. 7 is a schematic flowchart of a communication method according to an embodiment of this application. For ease of description, the following describes the method 700 by using an example of interaction between execution bodies: a first network device and a terminal device. It may be understood that the terminal device may be a component (for example, a chip or a circuit) of the terminal device, and the first network device may also be a component (for example, a chip or a circuit) of the network device. This is not limited.

In this application, the first network device sends broadcast signals to a service area. Correspondingly, the terminal device in the service area receives the broadcast signal.

A manner in which the first network device sends the broadcast signal to the service area is not limited.

The broadcast signal may be an SSB.

The first network device includes a first satellite or an access network device corresponding to the first satellite. This is not limited in this application.

The method 700 shown in FIG. 7 may include the following steps.

S710: The terminal device sends a random access request to the first network device.

After receiving the broadcast signal sent by the first network device, the terminal device initiates random access on a random access resource corresponding to the broadcast signal.

For example, the terminal device sends a message 1 (message 1, Msg1) to the first network device, where the Msg1 is used to initiate random access to the first network device.

S720: The first network device determines fourth indication information based on the random access request of the terminal device, where the fourth indication information indicates whether access of the terminal device is allowed.

The first network device determines, based on a contention status of a resource for random access initiated by the terminal device, whether access of the terminal device is allowed, and indicates, in a downlink signal for random access, whether access of the terminal device is allowed.

For example, the first network device determines, based on a preamble in the Msg1, whether access of the terminal device is allowed.

It may be understood that if a plurality of terminal devices initiate access on a same RO resource, the first network device may simultaneously send access prohibited signaling to the plurality of terminal devices.

S730: The first network device sends the fourth indication information to the terminal device.

Correspondingly, the terminal device receives the fourth indication information.

The first network device may send the fourth indication information by using a message 2 (message 2, Msg2) or a message 4 (message 4, Msg4), or may independently send the fourth indication information. This is not limited in embodiments of this application.

S740: The terminal device determines, based on the fourth indication information, whether to access the first network device.

There are two cases in which the terminal device receives the fourth indication information, and indicates, based on the fourth indication information, whether access is allowed or prohibited.

Case 1: The fourth indication information indicates that access is allowed.

When the terminal device is allowed to access the first network device, the terminal device may initiate an access procedure to the first network device.

Optionally, after accessing the first network device, the terminal device may send data on a resource of a first broadcast signal. Correspondingly, the first network device receives the data of the terminal device based on the resource of the first broadcast signal.

After collecting the data of the terminal device, the first network device moves to an area in which a ground station/core network is present, and then lands the data through the ground station and sends the data to the core network.

Case 2: The fourth indication information indicates that access is prohibited.

When the terminal device is prohibited from accessing the first network device, the terminal device does not initiate an access procedure to the first network device.

For example, the terminal device may continue to attempt to initiate random access to the first network device after a period of time.

For example, the terminal device may remain in a power saving state. For example, the terminal device may enter an idle state, obtain a synchronization signal of a next satellite, and initiate an access procedure when receiving a broadcast signal indicating that access is allowed.

For example, the terminal device may obtain the synchronization signal of the next satellite based on ephemeris information or auxiliary information of the next satellite. This is not limited in embodiments of this application.

In a possible implementation, the first network device may continuously adjust access control on the terminal device based on a change of storage space. Correspondingly, the terminal device may initiate access or not initiate access based on an adjustment of access control of the first network device.

For example, the fourth indication information indicates that access of the terminal device is prohibited. However, when the storage space of the first network device is sufficient, the first network device resends the fourth indication information to indicate that the terminal device can access the first network device, and the terminal device initiates random access to the first network device and sends data. For another example, the fourth indication information indicates that access of the terminal device is allowed. However, when the storage space of the first network device is insufficient, the first network device may resend the fourth indication information to indicate that access of the terminal device is prohibited.

It may be understood that when the storage space of the first network device is sufficient, the first network device may allow access of all terminal devices that initiate a random access request. When the storage space of the first network device is small, the first network device may prohibit access of most terminal devices that initiate a random access request.

In a possible implementation, the first network device sends second duration to the terminal device.

The second duration is duration in which access of the terminal device indicated by the fourth indication information is allowed or prohibited.

Specifically, the first network device may configure validity duration in which access of the terminal is prohibited and/or allowed.

For example, the first network device configures that access of the terminal device is allowed/prohibited, and configures duration in which access of the terminal device is allowed, a time start point, and a time start reference point. When the terminal device is configured to be allowed to access the first network device, the terminal device initiates access according to a normal procedure. When the terminal device is configured to be prohibited from accessing the first network device, the terminal device may initiate access according to a normal procedure after the validity duration, or may not initiate access.

It may be understood that, when the first duration is validity duration in which access of the terminal device is allowed, after the validity duration ends, the first network device may further indicate duration in which access is prohibited, or may continue to indicate duration in which access is allowed. Similarly, when the first duration is validity duration in which access of the terminal device is prohibited, after the validity duration ends, the first network device may further indicate duration in which access is allowed, or may continue to indicate duration in which access is prohibited. This is not limited in this application.

In this application, the validity duration may be indicated by using a timer, or may be indicated by using remaining validity duration. This is not limited in embodiments of this application.

If the first network device indicates the remaining validity duration, the first network device may not indicate a start point of the validity duration. This is not limited in embodiments of this application.

In a possible implementation, the first network device may further send fifth indication information to the terminal device.

The fifth indication information indicates the terminal device to initiate random access to a second network device.

The second network device includes a second satellite and/or an access network device corresponding to the second satellite.

It may be understood that the first network device may send the fifth indication information to the terminal device. When the terminal device fails to access the first network device within a service range of the first network device, or the terminal device is prohibited from accessing the first network device, the terminal device may initiate random access to the second network device based on the fifth indication information.

The second network device may be understood as a network device that replaces the first network device to provide a service. For example, after a satellite #1 flies away, a satellite #2 provides a service.

The second network device may also be understood as a serving satellite in a multi-satellite coordination scenario. For example, serving satellites in a current service area are sequentially a satellite #1, a satellite #2, and a satellite #3. When the satellite #1 indicates to the terminal device that access is not allowed, the satellite #1 may notify the terminal of a satellite that can be accessed, for example, the satellite #3. Although the terminal device may receive a message from the satellite #2, the terminal device skips receiving a synchronization downlink signal from the satellite #2, and initiates access when the satellite #3 provides a service.

In a possible implementation, the first network device may further send first resource information to the terminal device.

The first resource information is used by the terminal device to initiate random access to the second network device.

Correspondingly, the terminal device initiates random access to the second network device based on the first resource information and the fifth indication information.

In this solution, resource allocation between different satellites can be optimized, and storage overheads between different satellites can be balanced.

Optionally, the terminal device initiates random access to the second network device based on the first resource information and priority information.

Specifically, the terminal device accesses the second network device based on a priority of the terminal device and a priority of a service.

For example, a terminal with a high priority or a terminal device with a high service priority may access the second network device based on the first resource information, and a terminal device with a low priority or a terminal device with a low service priority cannot access the second network device based on the first resource information.

In this solution, a communication requirement of the terminal device with the high priority or the terminal device with the high service priority can be ensured, and user experience can be ensured.

Optionally, the first network device may further send sixth indication information to the terminal device.

The sixth indication information indicates ephemeris information and/or service time information of the second network device.

Correspondingly, the terminal device accesses the second network device based on the ephemeris information and/or the service time information, so that access efficiency can be improved.

In a possible implementation, the terminal device accesses the first network device, or accesses the second network device. Further, the first network device or the second network device may prohibit the terminal device from sending an uplink signal. For example, due to large storage space pressure, the first network device or the second network device may indicate to the terminal device that sending of the uplink signal is prohibited. It may be understood that the terminal device may receive a downlink signal from the first network device or the second network device.

For example, the terminal device accesses the first network device. The first network device may send indication information to the terminal device, where the indication information indicates to the terminal device that sending of the uplink signal is prohibited. Correspondingly, after receiving the indication information, the terminal device stops sending the uplink signal.

Optionally, the indication information may include time information, for example, effective time. Correspondingly, after receiving the indication information, the terminal device stops sending the uplink signal within the corresponding effective time. Alternatively, the time information includes a time period. After receiving the indication information, the terminal device stops sending the uplink signal within the corresponding time period. It may be understood that after the time period ends, the terminal device may continue to send the uplink signal.

Optionally, the first network device may further send indication information to indicate to lift prohibition of sending the uplink signal. Correspondingly, after receiving the indication information, the terminal device may send the uplink signal. It may be understood that the indication information may also include effective time or a time period, to indicate specific time or a specific time period for lifting prohibition.

Based on the foregoing technical solution, the first network device may determine, based on the random access request initiated by the terminal device, whether to prohibit access of the terminal device, and indicate, to the corresponding terminal device by using downlink signaling, whether access of the terminal device is prohibited, and the first network device determines, based on the access contention status, whether to allow access, so that access control can be more accurately performed on the terminal device in the service area.

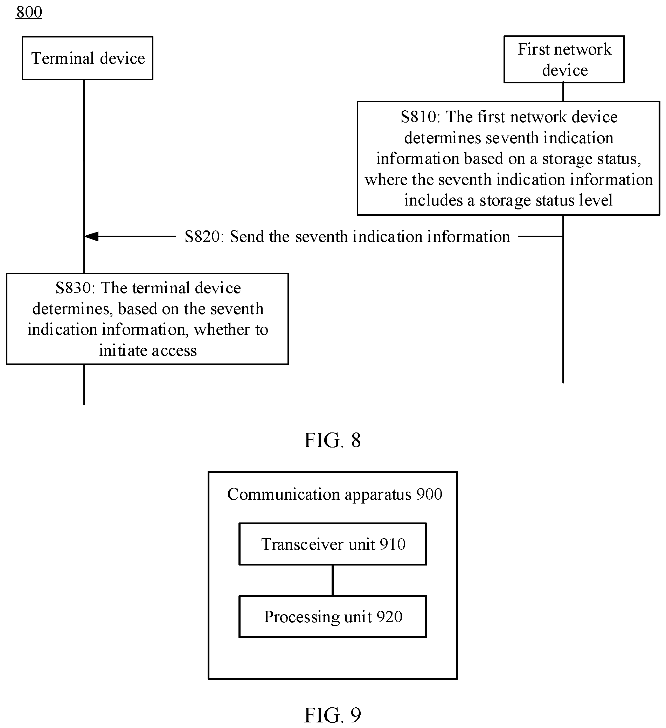

FIG. 8 is a schematic flowchart of a communication method according to an embodiment of this application. For ease of description, the following describes the method 800 by using an example of interaction between execution bodies: a first network device and a terminal device. It may be understood that the terminal device may be a component (for example, a chip or a circuit) of the terminal device, and the first network device may also be a component (for example, a chip or a circuit) of the network device. This is not limited.

In this application, the first network device sends broadcast signals to a service area. Correspondingly, the terminal device in the service area receives the broadcast signal.

A manner in which the first network device sends the broadcast signal to the service area is not limited. For example, the first network device sends the broadcast signal in an SSB scanning manner in a conventional technology.

The broadcast signal may be an SSB.

The first network device includes a first satellite or an access network device corresponding to the first satellite. This is not limited in this application.

The method 800 shown in FIG. 8 may include the following steps.

S810: The first network device determines seventh indication information based on a storage status.

The seventh indication information includes a storage status level of the first network device.

The seventh indication information indicates the terminal device to determine whether to initiate random access.

In this application, the first network device determines the storage status level based on a status of storage space. The storage status level is used to describe a capacity of the storage space, and different storage status levels indicate different capacities of the storage space.

For example, storage status levels are 0, 1, and 2. The storage status level 0 indicates that the storage space is large, and access of all terminals is allowed. The storage status level 1 indicates that the storage space is reduced, and access of a terminal with a loose service delay may be temporarily not performed. The storage status level 2 indicates that the storage space is insufficient, and only access of a terminal with an urgent service is allowed. Certainly, in practice, there may be more storage levels and corresponding access restrictions. The foregoing is merely an example for description.

The storage status level may also be referred to as a storage space level, a storage level, or a space level. All terms used to describe a storage capacity may be used as replacements of the storage status level. This is not limited in embodiments of this application.

S820: The first network device sends the seventh indication information to the terminal device.

Correspondingly, the terminal device receives the seventh indication information.

S830: The terminal determines, based on the storage status level indicated by the seventh indication information, whether to initiate access.

When the storage status level indicated by the seventh indication information is at low load, the terminal device may initiate random access. When the storage status level indicated by the seventh indication information is at high load, the terminal device may determine, based on priority information of the terminal device, whether to initiate random access. When the first network device initiates information indicating that the storage status level is at full load, the terminal cannot initiate access in remaining service time. All terminals may enter a power saving state until a next satellite arrives.

Optionally, when the terminal device initiates a random access request to the first network device, and the random access request carries a service type, the first network device determines, based on the service type, whether access of the terminal is allowed.

After the terminal device accesses the first network device, the terminal device sends data to the first network device. After collecting the data of the terminal device, the first network device moves to an area in which a ground station/core network is present, and then lands the data through the ground station and sends the data to the core network.

In a possible implementation, the first network device may further continuously adjust access control on the terminal device based on a change of the storage space. Correspondingly, the terminal device may initiate access or not initiate access based on an adjustment of access control of the first network device.

For example, the seventh indication information indicates a storage status level 2. However, when the storage space of the first network device is sufficient, the first network device re-indicates a storage status level 0. The terminal device determines, based on the updated storage status level, that the terminal device can perform access, and the terminal device initiates random access to the first network device and sends data. For another example, the seventh indication information indicates a storage status level 0. However, when the storage space of the first network device is insufficient, the first network device may re-indicate a storage status level 2, and the terminal device determines, based on the updated storage status level, not to perform access.

In a possible implementation, the first network device sends third duration to the terminal device.

The third duration is validity duration of the storage status level indicated by the seventh indication information.

For example, the first network device configures a storage status level 0, and configures validity duration of the storage status level 0, a time start point, and a time start reference point. The terminal device determines, based on the storage status level 0, to initiate random access to the first network device, and maintains random access within the validity duration. When the first network device configures a storage status level 2, the terminal device determines, based on the storage status level 2, not to initiate random access within validity duration. After the validity duration, the terminal device may initiate access according to a normal procedure, or may not initiate access.

It may be understood that the first duration is validity duration of the storage status level. After the validity duration ends, the first network device may further indicate an updated storage status level. This is not limited in this application.

In this application, the validity duration may be indicated by using a timer, or may be indicated by using remaining validity duration. This is not limited in embodiments of this application.

If the first network device indicates the remaining validity duration, the first network device may not indicate a start point of the validity duration. This is not limited in embodiments of this application.

In a possible implementation, the first network device may further send eighth indication information to the terminal device.

The eighth indication information indicates the terminal device to initiate random access to a second network device.

The second network device includes a second satellite and/or an access network device corresponding to the second satellite.

It may be understood that the first network device may send the eighth indication information to the terminal device. When the terminal device fails to access the first network device within a service range of the first network device, or the terminal device is prohibited from accessing the first network device, the terminal device may initiate random access to the second network device based on the eighth indication information.

The second network device may be understood as a network device that replaces the first network device to provide a service. For example, after a satellite #1 flies away, a satellite #2 provides a service.

The second network device may also be understood as a serving satellite in a multi-satellite coordination scenario. For example, serving satellites in a current service area are sequentially a satellite #1, a satellite #2, and a satellite #3. When the satellite #1 indicates to the terminal device that access is not allowed, the satellite #1 may notify the terminal of a satellite that can be accessed, for example, the satellite #3. Although the terminal device may receive a message from the satellite #2, the terminal device skips receiving a synchronization downlink signal from the satellite #2, and initiates access when the satellite #3 provides a service.

In a possible implementation, the first network device may further send first resource information to the terminal device.

The first resource information is used by the terminal device to initiate random access to the second network device.

Correspondingly, the terminal device initiates random access to the second network device based on the first resource information and the fifth indication information.

In this solution, resource allocation between different satellites can be optimized, and storage overheads between different satellites can be balanced.

Optionally, the terminal device initiates random access to the second network device based on the first resource information and priority information.

Specifically, the terminal device accesses the second network device based on a priority of the terminal device and a priority of a service.

For example, a terminal with a high priority or a terminal device with a high service priority may access the second network device based on the first resource information, and a terminal device with a low priority or a terminal device with a low service priority cannot access the second network device based on the first resource information.

In this solution, a communication requirement of the terminal device with the high priority or the terminal device with the high service priority can be ensured, and user experience can be ensured.

Optionally, the first network device may further send sixth indication information to the terminal device.

The sixth indication information indicates ephemeris information and/or service time information of the second network device.

Correspondingly, the terminal device accesses the second network device based on the ephemeris information and/or the service time information, so that access efficiency can be improved.

In a possible implementation, the terminal device accesses the first network device, or accesses the second network device. Further, the first network device or the second network device may prohibit the terminal device from sending an uplink signal. For example, due to large storage space pressure, the first network device or the second network device may indicate to the terminal device that sending of the uplink signal is prohibited. It may be understood that the terminal device may receive a downlink signal from the first network device or the second network device.

For example, the terminal device accesses the first network device. The first network device may send indication information to the terminal device, where the indication information indicates to the terminal device that sending of the uplink signal is prohibited. Correspondingly, after receiving the indication information, the terminal device stops sending the uplink signal.

Optionally, the indication information may include time information, for example, effective time. Correspondingly, after receiving the indication information, the terminal device stops sending the uplink signal within the corresponding effective time. Alternatively, the time information includes a time period. After receiving the indication information, the terminal device stops sending the uplink signal within the corresponding time period. It may be understood that after the time period ends, the terminal device may continue to send the uplink signal.

Optionally, the first network device may further send indication information to indicate to lift prohibition of sending the uplink signal. Correspondingly, after receiving the indication information, the terminal device may send the uplink signal. It may be understood that the indication information may also include effective time or a time period, to indicate specific time or a specific time period for lifting prohibition.

Based on the foregoing technical solution, the first network device may indicate the storage status level to the terminal device. The storage status level may be used as auxiliary information for the terminal device to determine whether to access the first network device. In other words, the terminal device determines the storage space of the first network device based on the storage status level, and determines, based on a size of the storage space, whether to access the first network device. Therefore, access control can be implemented more accurately on a terminal device side. Further, the terminal may determine, with reference to a priority or a service priority of the terminal, whether to access the first network device, to ensure smooth execution of a service with a high priority, and ensure user experience.

It should be understood that another possible implementation of embodiments of this application is similar to the method 600 to the method 800. For details, refer to the descriptions in the method 600 to the method 800. Details are not described herein again.

It should be understood that sequence numbers of the foregoing processes do not mean execution sequences. The execution sequences of the processes should be determined based on functions and internal logic of the processes, and should not constitute any limitation on implementation processes of embodiments of this application.

The foregoing mainly describes the solutions provided in embodiments of this application from a perspective of interaction between network elements. It may be understood that, to implement the foregoing functions, each network element, for example, the transmit end device or the receive end device, includes corresponding hardware structures and/or software modules for performing the functions. A person skilled in the art should be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the transmit end device or the receive end device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division during actual implementation. An example in which each functional module is obtained through division based on each corresponding function is used below for description.

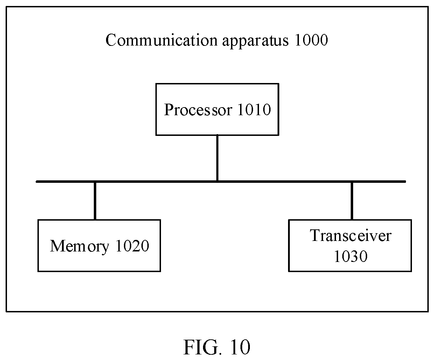

The foregoing describes in detail methods provided in embodiments of this application with reference to FIG. 6 to FIG. 8. The following describes in detail apparatuses provided in embodiments of this application with reference to FIG. 9 and FIG. 10. It should be understood that descriptions of apparatus embodiments correspond to the descriptions of the method embodiments. Therefore, for content that is not described in detail, refer to the foregoing method embodiments. For brevity, details are not described herein again.

FIG. 9 is a diagram of a structure of a communication apparatus according to an embodiment of this application.

The apparatus 900 includes a transceiver unit 910 and a processing unit 920. The transceiver unit 910 may be configured to implement a corresponding communication function. The processing unit 920 may be configured to perform data processing.

Optionally, the transceiver unit 910 may also be referred to as a communication interface or a communication unit, and includes a sending unit and/or a receiving unit. The transceiver unit 910 may be a transceiver (including a transmitter and/or a receiver), an input/output interface (including an input interface and/or an output interface), a pin, a circuit, or the like. The transceiver unit 910 may be configured to perform a sending step and/or a receiving step in the foregoing method embodiments.

Optionally, the processing unit 920 may be a processor (may include one or more processors), a processing circuit having a processor function, or the like, and may be configured to perform a step other than sending and receiving in the foregoing method embodiments.

Optionally, the apparatus 900 further includes a storage unit. The storage unit may be a memory, an internal storage unit (for example, a register or a cache), an external storage unit (for example, a read-only memory or a random access memory), or the like. The storage unit is configured to store instructions. The processing unit 920 executes the instructions stored in the storage unit, so that the communication apparatus performs the foregoing method.

In a design, the apparatus 900 may be configured to perform an action performed by the first network device in the method embodiments. For example, the apparatus 900 may be configured to perform an action performed by the first network device in the method 600. In this case, the apparatus 900 may be a component of the network device. The transceiver unit 910 is configured to perform a receiving/sending-related operation on a first network device side in the method embodiments, and the processing unit 920 is configured to perform a processing-related operation of the first network device in the method embodiments.

For example, the processing unit 920 is configured to determine first indication information, where the first indication information indicates that access of a terminal device in at least one first area is allowed or prohibited, each first area in the at least one first area does not overlap another first area, and the first area is a part of a service area of the first network device; and the transceiver unit 910 is configured to send the first indication information.

It should be understood that the transceiver unit 910 and the processing unit 920 may further perform other operations performed by the network device in the method 600. Details are not described herein again.

In a design, the apparatus 900 may be configured to perform an action performed by the terminal device in the method embodiments. For example, the apparatus 900 may be configured to perform an action performed by the terminal device in the method 600. In this case, the apparatus 900 may be a component of the terminal device. The transceiver unit 910 is configured to perform a receiving/sending-related operation on a terminal device side in the method embodiments, and the processing unit 920 is configured to perform a processing-related operation on the terminal device side in the method embodiments.

For example, the transceiver unit 910 is configured to receive first indication information, where the first indication information indicates that access of a terminal device in at least one first area is allowed or prohibited, first areas in the at least one first area do not overlap, and the first area is a part of a service area of a first network device; and the processing unit 920 is configured to initiate access to the first network device based on the first indication information.

It should be understood that the transceiver unit 910 and the processing unit 920 may further perform other operations performed by the terminal device in the method 600. Details are not described herein again.

In a design, the apparatus 900 may be configured to perform an action performed by the first network device in the method embodiments. For example, the apparatus 900 may be configured to perform an action performed by the first network device in the method 700. In this case, the apparatus 900 may be a component of the network device. The transceiver unit 910 is configured to perform a receiving/sending-related operation on a first network device side in the method embodiments, and the processing unit 920 is configured to perform a processing-related operation of the first network device in the method embodiments.

For example, the processing unit 920 is configured to determine fourth indication information based on a random access request of a terminal device, where the fourth indication information indicates whether access of the terminal device is allowed; and the transceiver unit 910 is configured to send the fourth indication information.

It should be understood that the transceiver unit 910 and the processing unit 920 may further perform other operations performed by the network device in the method 700. Details are not described herein again.

In a design, the apparatus 900 may be configured to perform an action performed by the terminal device in the method embodiments. For example, the apparatus 900 may be configured to perform an action performed by the terminal device in the method 700. In this case, the apparatus 900 may be a component of the terminal device. The transceiver unit 910 is configured to perform a receiving/sending-related operation on a terminal device side in the method embodiments, and the processing unit 920 is configured to perform a processing-related operation on the terminal device side in the method embodiments.

For example, the transceiver unit 910 is configured to send a random access request, where the transceiver unit is further configured to receive fourth indication information; and the processing unit 920 is configured to determine, based on the fourth indication information, whether to access a first network device.

It should be understood that the transceiver unit 910 and the processing unit 920 may further perform other operations performed by the terminal device in the method 700. Details are not described herein again.

In a design, the apparatus 900 may be configured to perform an action performed by the first network device in the method embodiments. For example, the apparatus 900 may be configured to perform an action performed by the first network device in the method 800. In this case, the apparatus 900 may be a component of the network device. The transceiver unit 910 is configured to perform a receiving/sending-related operation on a first network device side in the method embodiments, and the processing unit 920 is configured to perform a processing-related operation of the first network device in the method embodiments.

For example, the processing unit 920 is configured to determine seventh indication information based on a storage status of the first network device, where the seventh indication information includes a storage status level of the first network device; and the transceiver unit 910 is configured to send the seventh indication information.

It should be understood that the transceiver unit 910 and the processing unit 920 may further perform other operations performed by the network device in the method 800. Details are not described herein again.

In a design, the apparatus 900 may be configured to perform an action performed by the terminal device in the method embodiments. For example, the apparatus 900 may be configured to perform an action performed by the terminal device in the method 800. In this case, the apparatus 900 may be a component of the terminal device. The transceiver unit 910 is configured to perform a receiving/sending-related operation on a terminal device side in the method embodiments, and the processing unit 920 is configured to perform a processing-related operation on the terminal device side in the method embodiments.

For example, the transceiver unit 910 is configured to receive seventh indication information, where the seventh indication information includes a storage status level of a first network device; and the processing unit 920 is configured to determine, based on the first indication information, whether to initiate random access.

It should be understood that the transceiver unit 910 and the processing unit 920 may further perform other operations performed by the terminal device in the method 800. Details are not described herein again.

It should be further understood that the apparatus 900 herein is embodied in a form of functional units. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the network device in the foregoing embodiments, and may be configured to perform procedures and/or steps corresponding to the network device in the method embodiments. To avoid repetition, details are not described herein again.

The apparatus 900 in the foregoing solutions has a function of implementing a corresponding step performed by the device in the foregoing methods, or the apparatus 900 in the foregoing solutions has a function of implementing a corresponding step performed by the network device in the foregoing methods. The function may be implemented by hardware, or may be implemented by hardware by executing corresponding software. The hardware or software includes one or more modules corresponding to the foregoing function. For example, the transceiver unit may be replaced by a transceiver machine (for example, a sending unit in the transceiver unit may be replaced by a transmitter machine, and a receiving unit in the transceiver unit may be replaced by a receiver machine), and another unit, for example, the processing unit, may be replaced by a processor, to separately perform sending and receiving operations and related processing operations in the method embodiments.

In addition, the transceiver unit 910 may alternatively be a transceiver circuit (for example, may include a receiving circuit and a sending circuit), and the processing unit may be a processing circuit.

It should be noted that the apparatus in FIG. 9 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a diagram of a communication architecture according to an embodiment of this application. A communication apparatus 1000 shown in FIG. 10 includes a processor 1010, a memory 1020, and a transceiver 1030. The processor 1010 is coupled to the memory 1020, and is configured to execute instructions stored in the memory 1020, to control the transceiver 1030 to send a signal and/or receive a signal.

It should be understood that the processor 1010 and the memory 1020 may be combined into one processing apparatus. The processor 1010 is configured to execute program code stored in the memory 1020, to implement the foregoing functions. During specific implementation, the memory 1020 may alternatively be integrated into the processor 1010, or may be independent of the processor 1010. It should be understood that the processor 1010 may alternatively correspond to each processing unit in the foregoing communication apparatus, and the transceiver 1030 may correspond to each receiving unit and sending unit in the foregoing communication apparatus.

It should be further understood that the transceiver 1030 may include a receiver (which is also referred to as a receiver machine) and a transmitter (which is also referred to as a transmitter machine). The transceiver may further include an antenna, and there may be one or more antennas. The transceiver may alternatively be a communication interface or an interface circuit.

Specifically, the communication apparatus 1000 may correspond to the terminal device in the method 600 to the method 800 according to embodiments of this application. The communication apparatus 1000 may include a unit for implementing the method performed by the network device in the method 600 to the method 800. It should be understood that specific processes of performing the foregoing corresponding steps by the units are described in detail in the foregoing method embodiments. For brevity, details are not described herein again.

When the communication apparatus 1000 is a chip, the chip includes an interface unit and a processing unit. The interface unit may be an input/output circuit or a communication interface. The processing unit may be a processor, a microprocessor, or an integrated circuit integrated on the chip.

In an implementation process, steps in the foregoing methods can be completed by using a hardware integrated logic circuit in the processor or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor. To avoid repetition, details are not described herein again.

It should be noted that, the processor in embodiments of this application may be an integrated circuit chip, and has a signal processing capability. In an implementation process, the steps in the method embodiments may be completed by using a hardware integrated logic circuit in the processor or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor.

This application further provides a computer-readable medium. The computer-readable medium stores a computer program. When the computer program is executed by a computer, functions of any one of the foregoing method embodiments are implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the term "example", "for example", or the like is used to represent giving an example, an illustration, or a description. Any embodiment or design solution described as an "example" in this application should not be explained as being more preferred or having more advantages than another embodiment or design solution. Exactly, the term "example" is used to present a concept in a specific manner.

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that, in embodiments of this application, terms "include", "comprise", "have", and their variants all mean "include but are not limited to", unless otherwise specifically emphasized in another manner.

It should be understood that, in various embodiments of this application, first, second, and various numbers are merely used for distinguishing for ease of description, and are not used to limit the scope of embodiments of this application. For example, the numbers are used to distinguish between different information and the like.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first network device, and comprising:
determining first indication information, wherein the first indication information indicates that access of a terminal device in at least one first area is allowed or prohibited, any two first areas in the at least one first area do not overlap, and the first area is a part of a service area of the first network device; and
sending the first indication information.

2. The method according to claim 1, wherein each first area in the at least one first area is a coverage area of a first broadcast signal indicated by a first index, and the first indication information indicates that access of a terminal device that receives the first broadcast signal indicated by the first index is allowed or prohibited.

3. The method according to claim 2, wherein the first indication information has an association relationship with the first index.

4. The method according to any one of claims 1 to 3, wherein the method further comprises:
determining the first indication information based on a storage status of the first network device.

5. The method according to any one of claims 1 to 4, wherein the method further comprises:
sending first duration, wherein the first duration is duration in which access of a terminal device in each first area in the at least one first area is allowed or prohibited.

6. The method according to any one of claims 1 to 5, wherein the method further comprises:
sending second indication information, wherein the second indication information indicates the terminal device to initiate random access to a second network device.

7. The method according to claim 6, wherein the method further comprises:
sending first resource information to the terminal device, wherein the first resource information is used by the terminal device to initiate random access to the second network device.

8. The method according to claim 7, wherein the first resource information is used by the terminal device to initiate random access to the second network device based on priority information.

9. The method according to any one of claims 6 to 8, wherein the method further comprises:
sending third indication information, wherein the third indication information indicates ephemeris information and/or service time information of the second network device.

10. A communication method, applied to a first network device, and comprising:
determining fourth indication information based on a random access request of a terminal device, wherein the fourth indication information indicates whether access of the terminal device is allowed; and
sending the fourth indication information.

11. The method according to claim 10, wherein the method further comprises:
sending second duration, wherein the second duration indicates duration in which access of the terminal device is allowed or prohibited.

12. The method according to claim 10 or 11, wherein the method further comprises:
sending fifth indication information, wherein the fifth indication information indicates the terminal device to initiate random access to a second network device.

13. The method according to claim 12, wherein the method further comprises:
sending first resource information, wherein the first resource information is used by the terminal device to initiate random access to the second network device.

14. The method according to claim 13, wherein the first resource information is used by the terminal device to initiate random access to the second network device based on priority information.

15. The method according to any one of claims 12 to 14, wherein the method further comprises:
sending sixth indication information, wherein the sixth indication information indicates ephemeris information and/or service time information of the second network device.

16. A communication method, applied to a first network device, and comprising:
determining seventh indication information based on a storage status of the first network device, wherein the seventh indication information comprises a storage status level of the first network device; and
sending the seventh indication information.

17. The method according to claim 16, wherein the seventh indication information is used by the terminal device to determine whether to initiate random access.

18. The method according to claim 16 or 17, wherein the method further comprises:
sending third duration, wherein the third duration is validity duration of the seventh indication information.

19. The method according to any one of claims 16 to 18, wherein the method further comprises:
receiving an access request from the terminal device, wherein the access request comprises a service type; and
sending an access allowed message or an access rejected message based on the service type.

20. The method according to any one of claims 16 to 19, wherein the method further comprises:
sending eighth indication information, wherein the eighth indication information indicates the terminal device to initiate random access to a second network device.

21. The method according to any one of claims 16 to 20, wherein the method further comprises:
sending first resource information, wherein the first resource information is used by the terminal device to initiate random access to the second network device.

22. The method according to claim 21, wherein the first resource information is used by the terminal device to initiate random access to the second network device based on priority information.

23. The method according to any one of claims 20 to 22, wherein the method further comprises:
sending ninth indication information, wherein the ninth indication information indicates ephemeris information and/or service time information of the second network device.

24. A communication method, applied to a terminal device, and comprising:
receiving first indication information, wherein the first indication information indicates that access of a terminal device in at least one first area is allowed or prohibited, first areas in the at least one first area do not overlap, and the first area is a part of a service area of a first network device; and
determining, based on the first indication information, whether to initiate access to the first network device.

25. The method according to claim 24, wherein each first area in the at least one first area is a coverage area of a first broadcast signal indicated by a first index, and the first indication information indicates that access of a terminal device that receives the first broadcast signal indicated by the first index is allowed or prohibited.

26. The method according to claim 24 or 25, wherein the first indication information has an association relationship with the first index.

27. The method according to any one of claims 24 to 26, wherein the method further comprises:
receiving first duration, wherein the first duration is duration in which access of a terminal device in each first area in the at least one first area is allowed or prohibited.

28. The method according to claim 27, wherein the method further comprises:
receiving second indication information; and
when it is determined based on the first indication information that access to the first network device is prohibited, or when the first terminal device fails to access the first network device, initiating random access to a second network device based on the second indication information.

29. The method according to claim 28, wherein the method further comprises:
receiving first resource information; and
initiating random access to the second network device based on the first resource information.

30. The method according to claim 29, wherein the method further comprises:
initiating random access to the second network device based on priority information.

31. The method according to any one of claims 28 to 30, wherein the method further comprises:
receiving third indication information, wherein the third indication information indicates ephemeris information and/or service time information of the second network device.

32. A communication method, applied to a terminal device, and comprising:
sending a random access request;
receiving fourth indication information; and
determining, based on the fourth indication information, whether to access a first network device.

33. The method according to claim 32, wherein the method further comprises: receiving second duration, wherein the second duration indicates duration in which access of the terminal device is allowed or prohibited.

34. The method according to claim 32 or 33, wherein the method further comprises:
receiving fifth indication information; and
when it is determined based on the fourth indication information that access to the first network device is prohibited, or when the first terminal device fails to access the first network device, initiating random access to a second network device based on the fifth indication information.

35. The method according to claim 34, wherein the method further comprises:
receiving first resource information; and
initiating random access to the second network device based on the first resource information.

36. The method according to claim 35, wherein the method further comprises:
initiating random access to the second network device based on priority information.

37. The method according to any one of claims 34 to 36, wherein the method further comprises:
receiving sixth indication information, wherein the sixth indication information indicates ephemeris information and/or service time information of the second network device.

38. A communication method, applied to a terminal device, and comprising:
receiving seventh indication information, wherein the seventh indication information comprises a storage status level of the first network device; and
determining, based on the first indication information, whether to initiate random access.

39. The method according to claim 38, wherein the method further comprises:
receiving third duration, wherein the third duration is validity duration of the seventh indication information.

40. The method according to claim 38 or 39, wherein the method further comprises:
sending an access request, wherein the access request comprises a service type; and receiving an access allowed message or an access rejected message.

41. The method according to any one of claims 38 to 40, wherein the method further comprises:
receiving eighth indication information; and
when it is determined based on the seventh indication information that access to the first network device is prohibited, or when the first terminal device fails to access the first network device, initiating random access to a second network device based on the eighth indication information.

42. The method according to claim 41, wherein the method further comprises:
receiving first resource information; and
initiating random access to the second network device based on the first resource information.

43. The method according to claim 42, wherein the method further comprises:
initiating random access to the second network device based on priority information.

44. The method according to any one of claims 41 to 43, wherein the method further comprises:
receiving ninth indication information, wherein the ninth indication information indicates ephemeris information and/or service time information of the second network device.

45. A communication apparatus, comprising:
a processing unit, configured to determine first indication information, wherein the first indication information indicates that access of a terminal device in at least one first area is allowed or prohibited, each first area in the at least one first area does not overlap another first area, and the first area is a part of a service area of the first network device; and a transceiver unit, configured to send the first indication information.

46. The communication apparatus according to claim 45, wherein each first area in the at least one first area is a coverage area of a first broadcast signal indicated by a first index, and the first indication information indicates that access of a terminal device that receives the first broadcast signal indicated by the first index is allowed or prohibited.

47. The communication apparatus according to claim 46, wherein the first indication information has an association relationship with the first index.

48. The communication apparatus according to any one of claims 45 to 47, wherein the processing unit is further configured to determine the first indication information based on a storage status of the first network device.

49. The communication apparatus according to any one of claims 45 to 48, wherein the transceiver unit is further configured to send first duration, wherein the first duration is duration in which access of a terminal device in each first area in the at least one first area is allowed or prohibited.

50. The communication apparatus according to any one of claims 45 to 49, wherein the transceiver unit is further configured to send second indication information, wherein the second indication information indicates the terminal device to initiate random access to a second network device.

51. The communication apparatus according to claim 50, wherein the transceiver unit is further configured to send first resource information to the terminal device, wherein the first resource information is used by the terminal device to initiate random access to the second network device.

52. The communication apparatus according to claim 51, wherein the first resource information is used by the terminal device to initiate random access to the second network device based on priority information.

53. The communication apparatus according to any one of claims 50 to 52, wherein the transceiver unit is further configured to send third indication information, wherein the third indication information indicates ephemeris information and/or service time information of the second network device.

54. A communication apparatus, comprising:
a transceiver unit, configured to receive first indication information, wherein the first indication information indicates that access of a terminal device in at least one first area is allowed or prohibited, first areas in the at least one first area do not overlap, and the first area is a part of a service area of a first network device; and a processing unit, configured to determine, based on the first indication information, whether to initiate access to the first network device.

55. The communication apparatus according to claim 54, wherein
each first area in the at least one first area is a coverage area of a first broadcast signal indicated by a first index, and the first indication information indicates that access of a terminal device that receives the first broadcast signal indicated by the first index is allowed or prohibited.

56. The communication apparatus according to claim 54 or 55, wherein the first indication information has an association relationship with the first index.

57. The communication apparatus according to any one of claims 54 to 56, wherein the transceiver unit is further configured to receive first duration, wherein the first duration is duration in which access of a terminal device in each first area in the at least one first area is allowed or prohibited.

58. The communication apparatus according to claim 57, wherein the transceiver unit is further configured to receive second indication information; and the processing unit is further configured to: when it is determined based on the first indication information that access to the first network device is prohibited, or when the first terminal device fails to access the first network device, initiate random access to a second network device based on the second indication information.

59. The communication apparatus according to claim 58, wherein the transceiver unit is further configured to receive first resource information; and the processing unit is further configured to initiate random access to the second network device based on the first resource information.

60. The communication apparatus according to claim 59, wherein the processing unit is further configured to initiate random access to the second network device based on priority information.

61. The communication apparatus according to any one of claims 58 to 60, wherein the transceiver unit is further configured to receive third indication information, wherein the third indication information indicates ephemeris information and/or service time information of the second network device.

62. A communication apparatus, comprising:
a processing unit, configured to determine fourth indication information based on a random access request of a terminal device, wherein the fourth indication information indicates whether access of the terminal device is allowed; and a transceiver unit, configured to send the fourth indication information.

63. The communication apparatus according to claim 62, wherein the transceiver unit is further configured to send second duration, wherein the second duration indicates duration in which access of the terminal device is allowed or prohibited.

64. The communication apparatus according to claim 62 or 63, wherein the transceiver unit is further configured to send fifth indication information, wherein the fifth indication information indicates the terminal device to initiate random access to a second network device.

65. The communication apparatus according to claim 64, wherein the transceiver unit is further configured to send first resource information, wherein the first resource information is used by the terminal device to initiate random access to the second network device.

66. The communication apparatus according to claim 65, wherein the first resource information is used by the terminal device to initiate random access to the second network device based on priority information.

67. The communication apparatus according to any one of claims 64 to 66, wherein the transceiver unit is further configured to send sixth indication information, wherein the sixth indication information indicates ephemeris information and/or service time information of the second network device.

68. A communication apparatus, comprising:
a transceiver unit, configured to send a random access request, wherein the transceiver unit is further configured to receive fourth indication information; and a processing unit, configured to determine, based on the fourth indication information, whether to access a first network device.

69. The communication apparatus according to claim 68, wherein the transceiver unit is further configured to receive second duration, wherein the second duration indicates duration in which access of the terminal device is allowed or prohibited.

70. The communication apparatus according to claim 68 or 69, wherein the transceiver unit is further configured to receive fifth indication information; and the processing unit is further configured to: when it is determined based on the fourth indication information that access to the first network device is prohibited, or when the first terminal device fails to access the first network device, initiate random access to a second network device based on the fifth indication information.

71. The communication apparatus according to claim 70, wherein the transceiver unit is further configured to receive first resource information; and the processing unit is further configured to initiate random access to the second network device based on the first resource information.

72. The communication apparatus according to claim 71, wherein the processing unit is further configured to initiate random access to the second network device based on priority information.

73. The communication apparatus according to any one of claims 70 to 72, wherein the transceiver unit is further configured to receive sixth indication information, wherein the sixth indication information indicates ephemeris information and/or service time information of the second network device.

74. A communication apparatus, comprising:
a processing unit, configured to determine seventh indication information based on a storage status of the first network device, wherein the seventh indication information comprises a storage status level of the first network device; and a transceiver unit, configured to send the seventh indication information.

75. The communication apparatus according to claim 74, wherein the seventh indication information is used by the terminal device to determine whether to initiate random access.

76. The communication apparatus according to claim 74 or 75, wherein the transceiver unit is further configured to send third duration, and the third duration is validity duration of the seventh indication information.

77. The communication apparatus according to any one of claims 74 to 76, wherein the transceiver unit is further configured to receive an access request from the terminal device, wherein the access request comprises a service type; and the processing unit is further configured to send an access allowed message or an access rejected message based on the service type.

78. The communication apparatus according to any one of claims 74 to 77, wherein the transceiver unit is further configured to send eighth indication information, wherein the eighth indication information indicates the terminal device to initiate random access to a second network device.

79. The communication apparatus according to any one of claims 74 to 78, wherein the transceiver unit is further configured to send first resource information, wherein the first resource information is used by the terminal device to initiate random access to the second network device.

80. The communication apparatus according to claim 79, wherein the first resource information is used by the terminal device to initiate random access to the second network device based on priority information.

81. The communication apparatus according to any one of claims 78 to 80, wherein the transceiver unit is further configured to send ninth indication information, wherein the ninth indication information indicates ephemeris information and/or service time information of the second network device.

82. A communication apparatus, comprising:
a transceiver unit, configured to receive seventh indication information, wherein the seventh indication information comprises a storage status level of the first network device; and a processing unit, configured to determine, based on the first indication information, whether to initiate random access.

83. The communication apparatus according to claim 82, wherein the transceiver unit is further configured to receive third duration, and the third duration is validity duration of the seventh indication information.

84. The communication apparatus according to claim 82 or 83, wherein the transceiver unit is further configured to send an access request, wherein the access request comprises a service type; and the transceiver unit is further configured to receive an access allowed message or an access rejected message.

85. The communication apparatus according to any one of claims 82 to 84, wherein the transceiver unit is further configured to receive eighth indication information; and the processing unit is further configured to: when it is determined based on the seventh indication information that access to the first network device is prohibited, or when the first terminal device fails to access the first network device, initiate random access to a second network device based on the eighth indication information.

86. The communication apparatus according to claim 85, wherein the transceiver unit is further configured to receive first resource information, wherein the first resource information is used by the terminal device to initiate random access to the second network device.

87. The communication apparatus according to claim 86, wherein the processing unit is further configured to initiate random access to the second network device based on priority information.

88. The communication apparatus according to any one of claims 85 to 87, wherein the transceiver unit is further configured to receive ninth indication information, wherein the ninth indication information indicates ephemeris information and/or service time information of the second network device.

89. A communication apparatus, comprising a unit configured to perform the method according to any one of claims 1 to 9, claims 10 to 15, claims 16 to 23, claims 24 to 31, claims 32 to 37, or claims 38 to 44.

90. A communication apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 9, the method according to any one of claims 10 to 15, the method according to any one of claims 16 to 23, the method according to any one of claims 24 to 31, the method according to any one of claims 32 to 37, or the method according to any one of claims 38 to 44.

91. A computer-readable storage medium, wherein the computer-readable storage medium stores a computer program or instructions, and when the computer program or the instructions are run on a computer, the computer is enabled to perform the method according to any one of claims 1 to 9, the method according to any one of claims 10 to 15, the method according to any one of claims 16 to 23, the method according to any one of claims 24 to 31, the method according to any one of claims 32 to 37, or the method according to any one of claims 38 to 44.

92. A chip system, comprising: a processor, configured to invoke a computer program from a memory and run the computer program, to enable a communication device in which the chip system is installed to perform the method according to any one of claims 1 to 9, the method according to any one of claims 10 to 15, the method according to any one of claims 16 to 23, the method according to any one of claims 24 to 31, the method according to any one of claims 32 to 37, or the method according to any one of claims 38 to 44.

93. A computer program product, wherein when the computer program product runs on a computer, the computer is enabled to perform steps of the method according to any one of claims 1 to 9, steps of the method according to any one of claims 10 to 15, steps of the method according to any one of claims 16 to 23, steps of the method according to any one of claims 24 to 31, steps of the method according to any one of claims 32 to 37, or steps of the method according to any one of claims 38 to 44.
